(19) Europäisches Patentamt
European Patent Office
Office européen des brevets

(11) **EP 3 486 771 B1**

(12) **EUROPEAN PATENT SPECIFICATION**

(45) Date of publication and mention
of the grant of the patent:
**06.10.2021 Bulletin 2021/40**

(21) Application number: **18207189.4**

(22) Date of filing: **20.11.2018**

(51) Int Cl.:
*G06N 3/02* *(2006.01)*          *G06N 5/02* *(2006.01)*
*G06F 9/445* *(2018.01)*          *G06N 3/04* *(2006.01)*
*G06N 3/08* *(2006.01)*

(54) **PREDICTION OF APPLICATIONS TO BE PRELOADED BASED ON OBSERVED USER BEHAVIOUR AND THE ORDER OF STARTING THE APPLICATIONS**

VORHERSAGE, WELCHE SOFTWAREAPPLIKATIONEN IM VORAUS GELADEN WERDEN SOLLEN AUF DER BASIS VON BEOBACHTETEM BENUTZERVERHALTEN UND DER STARTREIHENFOLGE DER ANWENDUNGEN

PRÉDICTION QUELLES APPLICATIONS LOGICIELLES D'APPLICATIONS DOIT ÊTRE CHARGES À L'AVANCE BASÉ SUR SUR LE COMPORTEMENT OBSERVÉ DES UTILISATEURS ET DE L'ORDRE DE LANCER LES APPLICATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.11.2017 CN 201711157308**

(43) Date of publication of application:
**22.05.2019 Bulletin 2019/21**

(73) Proprietor: **GUANGDONG OPPO MOBILE TELECOMMUNICATIONS CORP., LTD.**
**Wusha, Chang'an**
**Dongguan,**
**Guangdong 523860 (CN)**

(72) Inventor: **CHEN, Yan**
**Dongguan, Guangdong 523860 (CN)**

(74) Representative: **Manitz Finsterwald**
**Patent- und Rechtsanwaltspartnerschaft mbB**
**Martin-Greif-Strasse 1**
**80336 München (DE)**

(56) References cited:
**US-A1- 2008 005 736     US-A1- 2014 189 538**
**US-A1- 2014 373 032**

## Description

### CROSS-REFERENCE TO RELATED APPLICATIONS

This application claims priority to Chinese Patent Application No. 201711157308.7, filed on November 20, 2017.

### TECHNICAL FIELD

Embodiments of the present application relate to the field of machine learning and, in particular, to an application prediction method, an application preloading method and an application preloading apparatus.

### BACKGROUND

With the rapid development of the electronic technology and the improvement of the standard of people's everyday life, a terminal, such as smart phone and tablet, has become an indispensable part of people's daily life.

There are various applications (Application Software, APP) installed on the terminal. In order to make the applications run more fluently, the terminal will usually prepare loading resources for some applications in advance, that is, preload some applications in advance.

However, it is not appropriate to preload applications randomly, since if too many resources are preloaded, too much memory will be occupied, and the power consumption will become large, which will seriously affect the fluency of the terminal. Therefore, the optimization of the preloading mechanism and the reducing of the power consumption of the terminal become critical.

US2014373032A1 discloses systems and methods of pre-fetching data for applications in a computer system that are terminated or suspended and may be pre-launched by the computer system. The applications may employ data that is remote from the computer system and available from a third party content resource.

US2008005736A1 discloses architecture that employs probabilistic and/or decision-theoretic model(s) of application usage to predict application use and in view of bounded or limited-availability memory.

US2014189538A1 discloses a communication device comprising a memory, a user interface and a processor, and a method thereof. A first user interaction is detected at the user interface of the communication device with a first application of the communication device. A second user interaction is detected at the user interface of the communication device with a second application of the communication device, in which the second user interaction succeeds the first user interaction. A third application of the communication device is selected based on the first and second applications.

## SUMMARY

The invention is defined by the independent claims. The present application provides an application prediction method, an application preloading method and an application preloading apparatus, which may optimize the application preloading mechanism, and reduce the power consumption of the terminal system.

The present application provides an application prediction method, performed by a processor executing instructions stored on a memory, wherein the method includes:

>obtaining a user behavior sample in a preset time period, where the user behavior sample includes an association record of usage timing of at least two applications, wherein the association record of usage timing includes a usage record of the at least two applications and a usage timing relationship of the at least two applications;
>grouping the association record of usage timing to obtain a plurality of association record groups of usage timing; and
>training a preset gated recurrent unit (GRU) neural network model according to the plurality of association record groups of usage timing to generate an application prediction model;
>wherein the obtaining the user behavior sample in the preset time period comprises:
>
>>sorting the at least two applications according to a usage frequency of the at least two applications in the preset time period;
>>determining at least two target applications according to a sorting result; and
>>determining the association record of usage timing according to usage status of the at least two target applications as the user behavior sample.
>
>wherein the determining the association record of usage timing according to the usage status of the at least two target applications comprises:
>
>>sampling a usage log of the at least two target applications in accordance with a preset sampling period to determine whether the at least two target applications are in a usage state at sampling instants, wherein one and only one target application is in the usage status at the sampling instants, or no target application is in the usage status at the sampling instants; and
>>associating the usage status of the at least two target applications according to the sampling instants and the usage status so as to determine the association record of usage timing;
>
>wherein, the training the preset GRU neural network model according to the plurality of association record groups of usage timing comprises:

training the preset GRU neural network model according to the usage status corresponding to the sampling instants in the plurality of association record groups of usage timing;

wherein the application prediction model includes a reset gate $r_t$, an update gate $z_t$, a candidate status unit $\tilde{h}_t$, and an output status unit $h_t$, which are respectively calculated by the following formula:

$$z_t = \sigma(W_z x_t + U_z h_{t-1})$$

$$r_t = \sigma(W_r x_t + U_r h_{t-1})$$

$$\tilde{h}_t = \tanh(r_t \odot U h_{t-1} + W x_t)$$

$$h_t = (1 - z_t) \odot \tilde{h}_t + z_t \odot h_{t-1}$$

wherein $x_t$ indicates an application used at instant t in the association record of usage timing, each of $W$, $W_*$, $U$ and $U_*$ indicate network parameters for learning, wherein $* \in \{r, z\}$, $z_t$ indicates an update gate at instant t, $r_t$ indicates a reset gate at instant t, $\tilde{h}_t$, indicates a candidate status unit at instant t, $h_t$ indicates an output status unit at instant t, $h_{t-1}$ indicates an output status unit at instant t-1, $\sigma$ indicates a Sigmoid Function of $S(x) = \dfrac{1}{1+e^{-x}}$, $\odot$ indicates vector bitwise multiplying, and a formula of tanh function is $f(x) = \tanh(x) = \dfrac{e^x - e^{-x}}{e^x + e^{-x}}$;

wherein the method further includes:

obtaining usage status of at least two applications running on a terminal at instant t, and usage status of the at least two applications running on the terminal corresponding to instants t-1 to t-n, wherein, n is a natural number greater than or equal to 2;

inputting the usage status of the at least two applications to the application prediction model to obtain probabilities to start the at least two applications; and

determining an application to be started corresponding to instant t+1 according to the probabilities to start the at least two applications, and preloading the application to be started .

A second aspect, the present application provides an application prediction apparatus, including a processor and a memory storing instructions thereon, the processor when executing the instructions, being configured to:

obtain a user behavior sample in a preset time period, where the user behavior sample includes association record of usage timing of at least two applications, wherein the association record of usage timing comprises a usage record of the at least two applications and a usage timing relationship of the at least two applications;

group the association record of usage timing to obtain a plurality of association record groups of usage timing; and

train a preset GRU neural network model according to the plurality of association record groups of usage timing to generate an application prediction model;

wherein the processor is further configured to:

sort the at least two applications according to a usage frequency of the at least two applications in the preset time period;

determine at least two target applications according to a sorting result; and

determine the association record of usage timing according to usage status of the at least two target applications as the user behavior sample;

wherein the processor is further configured to:

sample a usage log of the at least two target applications in accordance with a preset sampling period to determine whether the at least two target applications are in a usage state at sampling instants, wherein one and only one target application is in the usage status at the sampling instants, or no target application is in the usage status at the sampling instants;

associate the usage status of the at least two target applications according to the sampling instants and the usage status so as to determine the association record of usage timing; and

train the preset GRU neural network model according to the usage status corresponding to the sampling instants in the plurality of association record groups of usage timing;

wherein the application prediction model includes a reset gate $r_t$, an update gate $z_t$, a candidate status unit $\tilde{h}_t$, and an output status unit $h_t$, which are respectively calculated by the following formula:

$$z_t = \sigma(W_z x_t + U_z h_{t-1})$$

$$r_t = \sigma(W_r x_t + U_r h_{t-1})$$

$$\tilde{h}_t = \tanh(r_t \odot U h_{t-1} + W x_t)$$

$$h_t = (1 - z_t) \odot \tilde{h}_t + z_t \odot h_{t-1}$$

wherein $x_t$ indicates an application used at instant t in the association record of usage timing, each of $W$, $W_*$, $U$ and $U_*$ indicate network parameters for learning, wherein $* \in \{r, z\}$, $z_t$ indicates an update gate at instant t, $r_t$ indicates a reset gate at instant t, $\tilde{h}_t$, indicates a candidate status unit at instant t, $h_t$ indicates an output status unit at instant t, $h_{t-1}$ indicates an output status unit at instant t-1, σ indicates a Sig-

$$S(x) = \frac{1}{1 + e^{-x}}$$

moid Function of , ⊙ indicates vector bitwise multiplying, and a formula of tanh function

$$f(x) = \tanh(x) = \frac{e^x - e^{-x}}{e^x + e^{-x}}$$

is ;

wherein the processor is further configured to:

obtain usage status of at least two applications running on a terminal at instant t, and usage status of the at least two applications running on the terminal corresponding to instants t-1 to t-n, wherein, n is a natural number greater than or equal to 2;
input the usage status of the at least two applications to the application prediction model to obtain probabilities to start the at least two applications; and
determine an application to be started corresponding to instant t+1 according to the probabilities to start the at least two applications, and preloading the application to be started.

The application prediction model establishing and the application preloading schemes provided in the embodiments of the present application, when establishing an application prediction model, first obtain a user behavior sample in a preset time period, where the user behavior sample includes an association record of usage timing of at least two applications, then group the association record of usage timing to obtain a plurality of association record groups of usage timing, and train a preset GRU neural network model according to the plurality of association record groups of usage timing to generate the application prediction model, and when preloading an application, obtain usage status of applications running on a terminal at t instant, and usage status of the applications running on the terminal corresponding to t-1 to t-n instants, where n is a natural number greater than or equal to 2, and input the usage status to a pre-trained application prediction model to obtain probabilities to start the applications outputted by the application prediction model, where, the application prediction model is generated by training the preset GRU neural network model from a plurality of association record groups of usage timing, and the plurality of association record groups of usage timing are obtained by grouping association record of usage timing of the applications in a preset time period, and finally determine an application to be started corresponding to t+1 instant according to the probabilities, and preload the application to be started. By diving the association record of usage timing of the applications of the user in the preset time period, and using the plurality of association record groups of usage timing as the training sample to generate the application prediction model, which optimizes the applications preloading mechanism by taking full advantage of the association record of usage timing of the applications that truly reflects the user behavior, it not only solves the technical problems of too many resources being preloaded by the applications, too many resources being occupied and power consumption becoming larger, and even the fluency of the terminal being affected, but also may effectively overcome the problems of the exploding gradient or vanishing gradient generated when the application prediction model is trained based on the simple recurrent neural network, and further improve the precision and speed of the training of the application prediction model and the accuracy of the prediction of the application to be started.

## BRIEF DESCRIPTION OF DRAWINGS

FIG. 1 is a flowchart of an application prediction model establishing method according to an embodiment of the present application;
FIG. 2 is a schematic diagram of the process of grouping an association record of usage timing by means of sliding window according to an embodiment of the present application;
FIG. 3 is a structure diagram of a GRU structural unit in an application prediction model by training GRU network according to an embodiment of the present application;
FIG. 4 is a structure diagram of an application prediction model built based on a GRU network according to an embodiment of the present application;
FIG. 5 is a flowchart of another application prediction model establishing method according to an embodiment of the present application;
FIG. 6 is a flowchart of still another application prediction model establishing method according to an embodiment of the present application;
FIG. 7 is a flowchart of an application preloading method according to an embodiment of the present application;
FIG. 8 is a structure diagram of an application prediction model establishing apparatus according to an embodiment of the present application;

FIG. 9 is a structure diagram of an application preloading apparatus according to an embodiment of the present application;

FIG. 10 is a structure diagram of a terminal according to an embodiment of the present application;

FIG. 11 is a structure diagram of another terminal according to an embodiment of the present application; and

FIG. 12 is a structure diagram of still another terminal according to an embodiment of the present application.

## DESCRIPTION OF EMBODIMENTS

The technical solutions of the present disclosure will be further described below in conjunction with the accompanying drawings through the specific embodiments. It should be understood that the specific embodiments described herein are merely illustrative of the present disclosure. It should also be noted that, for the convenience of description, only some, but not all, of the structures related to the present disclosure are shown in the drawings.

Before discussing the exemplary embodiments in more detail, it should be noted that some exemplary embodiments are described as a process or method depicted as a flowchart. Although the flowcharts describe the various steps as a sequential process, many of the steps therein can be implemented in parallel, concurrently, or concurrently. The process may be terminated when its operation is completed. The processing may correspond to methods, functions, procedures, subroutines, subprograms.

On a terminal device, application preloading is a common and effective method to improve user experience. Some applications are enabled to run fluently by preparing the loading recourses of these applications in advance.

In the prior art, the application preloading is mainly based on a statistical method. For example, there are several applications that may be used frequently by the user, and all of them may be preloaded; or, the applications may be scored and ranked according to the user's usage habit, and the highly ranked applications are preloaded. However, since the above methods ignore the association information between the applications and the time information, the accuracy of the prediction of the preloading applications is insufficient, thus too many resources need to be preloaded, which will affect user's experience. In fact, the use will use only one application at the next instant. Therefore, it is important to accurately predict which application the user will start next time.

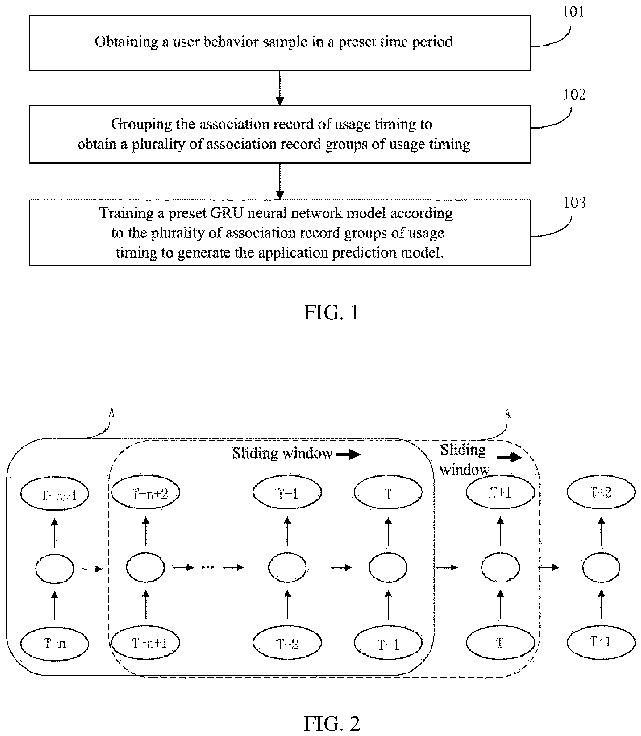

FIG. 1 is a flowchart of an application prediction model establishing method according to an embodiment of the present application. This method may be implemented by an application prediction model establishing apparatus, where this apparatus may be implemented by software and/or hardware, which may usually be integrated in a terminal. The terminal may be a server, such as a model establishing server used to accomplish an application prediction model establishing function, and may also be a mobile terminal. As shown in FIG. 1, the method may include:

Step 101: obtaining a user behavior sample in a preset time period.

The user behavior sample includes an association record of usage timing of at least two applications, wherein the association record of usage timing includes a usage record of the at least two applications and a usage timing relationship of the at least two applications.

In an embodiment of the present application, the user behavior sample in the preset time period refers to a history association record of usage timing of using applications on the terminal by a user in the preset time period, for example, the association record of usage timing of using the applications on the terminal by the user in the time period of 8:00-20:00. For example, the user uses the application of Taobao at 8:00, switches from Taobao to the application of Jingdong Mall at 8:30, and switches from Jingdong Mall to the application of Alipay at 9:00. For another example, the user uses the application of Meituan Takeaway at 11:40, and switches from Meituan Takeaway to the application of WeChat at 12:00. The association record of usage timing of the applications not only includes a usage record of the user regarding the applications at each time point, but also includes a usage timing relationship of the user regarding the applications.

Although, various applications are usually installed on the terminal, the number of applications used by the user is limited in a preset period of time, such as one day, and the number of the applications frequently used by the user is also limited. Most of the applications are used less frequently, and can be used once a week or even once a month. If all the applications installed on the terminal are used as the training sample of the application prediction model, not only the amount of data is large, but also the precision of the application prediction model establishment may be affected, affecting the accuracy of the prediction of the application to be started by the user at the next time.

In an embodiment, the obtaining the user behavior sample in the preset time period includes: sorting the applications according to a usage frequency of the applications in the preset time period; determining at least two target applications according to a sorting result; and determining the association record of usage timing according to usage status of the at least two target applications as the user behavior sample. The advantage of this setting is that, it not only can reduce the data volume of the training sample during the application prediction model establishment dramatically, but also can improve the precision and efficiency of the application prediction model establishment, and furthermore, improve the accuracy of the prediction of the application to be started.

For example, the preset time period is 8:00-22:00, a usage frequency of the user regarding each of the applications on the terminal in this preset time period is counted. Each of the applications is sorted according to the usage frequency, for example, each of the applications is sorted in descending order of the usage frequency. According to the sorting result, the first M target applications are selected, that is, the first M target applications are determined as the applications frequently used by the user, where, $M \geq 2$. Furthermore, the association record of usage timing is determined according to usage status of the target applications, where the association record of usage timing records the usage condition of the user regarding the M target applications at each time point in the preset time period, not only includes the usage information of the M target applications and the corresponding instants when they are used, but also includes the usage timing relationship of the M target applications.

In addition, during the process of using the applications on the terminal by the user, a useless application usage record may be generated frequently due to a misoperation of the user. If the user intends to trigger the application of Taobao, but click the application of Compass by mistake, the user may usually quit the application of Compass quickly. Similarly, the useless application usage record may also affect the precision of the application prediction model establishment, and affect the accuracy of the prediction of the application to be started at the next instant.

In an embodiment, the useless application usage record is filtered out from the history usage record of the applications in the preset time period. For example, if a usage time of a certain application is less than a preset time threshold, the usage record of the application will be filtered out. For example, the usage time of the user regarding the application A is 3s, the preset time threshold is 5s, then the usage record of the application A is filtered out. The advantage of this setting is that, it can improve the precision of the application prediction model establishment effectively, and furthermore, improve the accuracy of the prediction of the application to be started.

It should be noted that, the useless application usage record may be filtered out from the history usage record of the applications first, and then the target applications (the applications frequently used by the user) are determined according to the usage frequency of the applications. Or the target applications (the applications frequently used by the user) may be determined according to the usage frequency of the applications first, and then the useless application usage record is filtered out. The embodiment of the present application does not limit the sequence of filtering out the useless application usage record and determining the target applications according to the usage frequency of the applications.

In an embodiment, the determining the association record of usage timing according to the usage status of the at least two target applications includes: sampling a usage log of the at least two target applications, in accordance with a preset sampling period, to determine whether the at least two target applications are in a usage state at a sampling instant; and associating the usage status of at least two target applications according to the sampling instants and the usage status to determine the association record of usage timing. The advantage of this setting is that, it not only can obtain the association record of usage timing of the applications in the preset time period flexibly, but also can improve the precision of the application prediction model establishment, and furthermore, improve the accuracy of the prediction of the application to be started.

For example, the usage log of the target applications is sampled in accordance with a preset sampling period, for example, the usage log of the target applications in the preset time period is sampled once every three minutes, and a first sampling is conducted from the very beginning of the preset time period. For example, the preset time period is 8:00-12:00, then the first sampling is conducted at 8:00, the second sampling is conducted at 8:03, the third sampling is conducted at 8:06, and so on, until the sampling of the usage log of the target applications in the preset time period is accomplished. Here, the preset sampling period may be set according to the length of the preset time period. For example, if the preset time period is relative long, the preset sampling period may be set to be long adaptively, and when the preset time period is relative short, the preset sampling period may be set to be short adaptively. For another example, the preset sampling period may be set according to the user's requirement adaptively. When the precision of the prediction of the application to be started is required to be high, the preset sampling period may be set to be shorter, and when the precision of the prediction of the application to be started is required to be low, the preset sampling period may be set to be longer. For a further example, the preset sampling period may be set according to the ability of the terminal to process data volume, if the ability of the terminal to process data volume of the training sample during the application prediction model establishment is high, the preset sampling period may be set to be shorter, and when the ability of the terminal to process data volume of the training sample during the application prediction model establishment is low, the preset sampling period may be set to be longer. The present embodiment does not limit the set length and the setting way of the preset sampling period.

In the present embodiment, the usage status of each target application at each sampling instant is determined. It should be noted, at the sampling instant, one and only one target application is in a usage status, or no target application is in the usage status at the sampling instant, for example the terminal is in the desktop status, or the screen of the terminal is off. The usage status of the at least two target applications are associated according to the sampling instants and the usage status, so as to determine the association record of usage timing. For example, the application A is in the usage status at a first sampling instant, the application B is in the usage status at a second sampling instant, the screen of the terminal is off at a third sampling instant, denoted as no application being used, and the application C is in the usage status at a fourth sampling instant. The usage status of the applications are associated according to the sampling instants and the usage status, so as to determine the association record of usage timing.

In an embodiment, the association record of usage timing of the applications may be recorded in a form of the sampling instants and identification information of the usage status. For example, M target applications are denoted as 1, 2, ..., M respectively in a descending order of the usage frequency. If there is no application being used at the sampling instant, denote as M+1. It can be understood that, 1, 2, ..., M, M+1 are used as identification information of the usage status of the applications. The usage association record of the applications may be recorded through the identification information corresponding to the usage status of the applications corresponding to the sample instants. It should be noted that, the present embodiment does not limit the specific representation way of the association record of usage timing, as long as unique information can be used to represent the usage status of different applications at the sampling instant.

Step 102: grouping the association record of usage timing to obtain a plurality of association record groups of usage timing.

In the embodiment of the present application, the association record of usage timing of the at least two applications in the preset time period is grouped. The association record of usage timing is grouped in accordance with the timing relationship, so as to obtain a plurality of association record groups of usage timing. It can be understood that, the association record of usage timing is grouped in accordance with the timing relationship, so as to obtain a plurality of sub association records of usage timing, that is, the plurality of sub association records of usage timing are the obtained plurality of association record groups of usage timing. In the process of grouping, the preset time period may be equally divided into several sub time periods, and the association record of usage timing is equally divided in accordance with the sub time periods. That is, the obtained plurality of sub association records of usage timing are the association record of usage timing of the applications corresponding to each sub time period. Of course, the preset time period may be equally divided into several sub time periods which are not exactly the same or totally different, and the association record of usage timing is grouped in accordance with the sub time periods which are not exactly the same or totally different. In the process of grouping, the association record of usage timing may be grouped by means of sliding window. For example, a size fixed sliding window is moved along the association record of usage timing of the applications in the preset time period with equidistant step or non-equidistant step. The association record of usage timing corresponding to respective sliding window is recorded as one association record group of usage timing. For another example, the sliding window is scaled in different sizes, every time the sliding window is moved the size is scaled. The sliding window that is scaled with multiple sizes is moved along the association record of usage timing of the applications in the preset time period with equidistant step or non-equidistant step. The association record of usage timing corresponding to respective sliding window is recorded as one group of association record of usage timing.

In an embodiment, a usage log of the target applications is sampled in accordance with the preset sampling period, the association record of usage timing determined by the sampling instant and the usage status of the applications corresponding to the sampling instant are grouped, so as to obtain a plurality of association record groups of usage timing. For example, the association record of usage timing of the applications in the preset time period may be grouped according to the timing relationship of the sampling instant and the number of the sampling instant. The sampling instant corresponding to the preset time period may be divided into several sampling instant groups in accordance with the timing relationship. The number of the sampling instant of each sampling instant group may be the same, not exactly the same or totally different. The association record of usage timing corresponding to each sampling instant group are used as the plurality of association record groups of usage timing. In the process of grouping, the association record of usage timing determined by the sampling instant and the usage status corresponding to the sampling instant may also be grouped by means of sliding window. For example, a size fixed sliding window or a sliding window that is scaled with multiple sizes is used to slide along the association record of usage timing with equidistant step or non-quidistant step. The association record of usage timing corresponding to respective sliding window is recoded as one association record group of usage timing. Where, one step can be understood as one sampling instant. For example, FIG. 2 is a schematic diagram of the process of grouping the association record of usage timing Formby means of sliding window according to an embodiment of the present application. As shown in FIG. 2, the size of the sliding window A is fixed, and one step the sliding window A moves is one sampling instant. Where, in FIG. 2, T-n+1, T-n, ..., T, T+1, T+2 all represent the sampling instant.

In an embodiment, the association record of usage timing of the at least two target applications corresponding to the first n sampling instants is used as a first association record group of usage timing, the association record of usage timing of the at least two target applications corresponding to the second to the n+1th sampling instants is used as a second association record group of usage timing, and so on, to obtain m-n+1 association record groups of usage timing, where, n is a natural number greater than or equal to 2, and m is a natural number greater than 3. The advantage of this setting is that, a misdetection rate of the usage status of the applications in the association record of usage timing of the applications in the preset time period is extremely low, since it moves along the entire association record of usage timing, and no situation in which application usage status switching of the applications may occur is missed. Precision of the application prediction model establishment may be improved effectively, and the accuracy during application prediction is improved.

For example, the association record of usage timing of the applications corresponding to the first n sampling instants is used as a first association record group of usage timing, the association record of usage timing of the applications corresponding to the second to the n+1$^{th}$ sampling instants is used as the second association record group of usage timing, the association record of usage timing of the applications corresponding to the third to the n+2$^{th}$ sampling instants is used as a third association record group of usage timing, and so on, to obtain m-n+1 association record groups of usage timing. Where, n is a natural number greater than or equal to 3, and m is a natural number greater than 4. For example, n=5, and m=8. That is, there are 8 sampling instants corresponding to the association record of usage timing of the applications in the preset time period, and in accordance with timing relationship, the association record of usage timing corresponding to each 5 sampling instants is used as one association record group of usage timing. It can be understood that, the association record of usage timing corresponding to the first sampling instant to the fifth sampling instant is used as the first association record group of usage timing, the association record of usage timing corresponding to the second sampling instant to the sixth sampling instant is used as the second association record group of usage timing, the association record of usage timing corresponding to the third sampling instant to the seventh sampling instant is used as the third association record group of usage timing, and the association record of usage timing corresponding to the fourth sampling instant to the eighth sampling instant is used as the fourth association record group of usage timing.

Step 103: training a preset GRU neural network model according to the plurality of association record groups of usage timing to generate the application prediction model.

In an embodiment of the present application, the plurality of association record groups of usage timing are used as training samples to train the GRU neural network model (hereinafter referred to as GRU network) model, and generate the application prediction model.

The GRU network is a variant of Recurrent Neural Networks (RNN), or GRU is a special type of RNN. GRU can effectively solve the problem of the exploding gradient or vanishing gradient of the simple recurrent neural network.

In an embodiment, usage statuses corresponding to a sampling instant in a plurality of association record groups of usage timing (at least two groups) are taken as a training sample and inputted to the GRU network for training. That is, the usage statuses of the applications corresponding to each sampling instant in the plurality of association record groups of usage timing are taken as a training sample, and the GRU network is trained to generate an application prediction model, where the plurality of association record groups of usage timing are obtained by grouping the association record of usage timing of at least two applications in the preset time period in step 102.

Where the application prediction model generated by training the GRU network includes a reset gate $r_t$, an update gate $z_t$, a candidate status unit $\tilde{h}_t$, and an output status unit $h_t$, which are respectively calculated by the following formula:

$$z_t = \sigma(W_z x_t + U_z h_{t-1}) \qquad (1)$$

$$r_t = \sigma(W_r x_t + U_r h_{t-1}) \qquad (2)$$

$$\tilde{h}_t = \tanh(r_t \odot U h_{t-1} + W x_t) \qquad (3)$$

$$h_t = (1 - z_t) \odot \tilde{h}_t + z_t \odot h_{t-1} \qquad (4)$$

Where $x_t$ indicates an application used at instant t in the association record of usage timing, each of $W$, $W_*$, $U$ and $U_*$ indicate network parameters for learning, where $* \in \{r, z,\}$, $z_t$ indicates an update gate at instant t, $r_t$ indicates a reset gate at instant t, $\tilde{h}_t$ indicates a candidate status unit at instant t, $h_t$ indicates an output status unit at instant t, $h_{t-1}$ indicates an output status unit at instant t-1, $\sigma$ indicates a Sigmoid Function, wherein the Sigmoid Function is $S(x) = \dfrac{1}{1 + e^{-x}}$, $\odot$ indicates vector bitwise multiplying, and a formula of tanh function is $f(x) = \tanh(x) = \dfrac{e^x - e^{-x}}{e^x + e^{-x}}$.

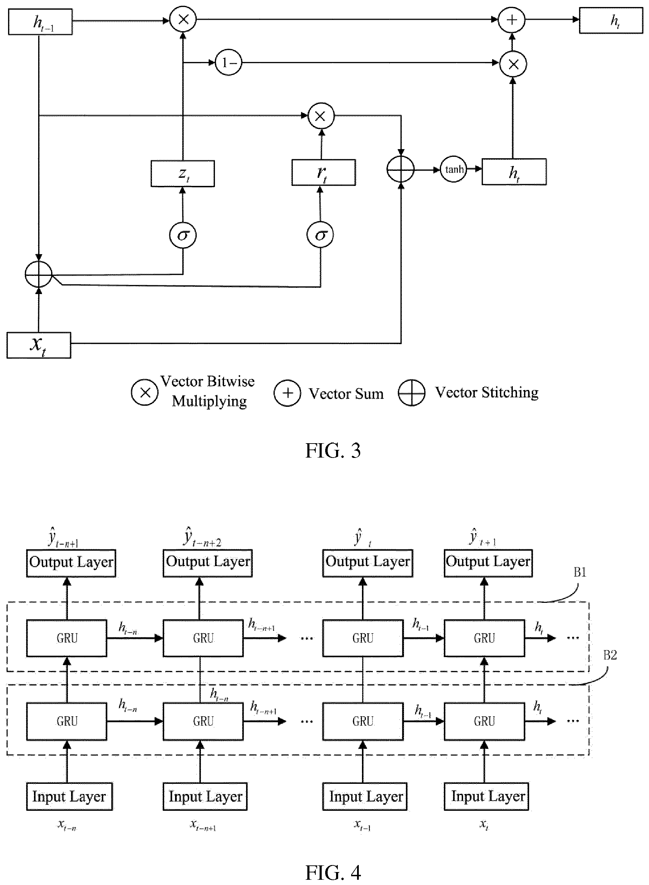

FIG. 3 is a structure diagram of a GRU structural unit in an application prediction model by training GRU network according to an embodiment of the present application.

In an embodiment of the present application, $x_t$ indicates the usage status information of the application corresponding to the association record of usage timing at instant t. Because at one same instant, the usage status information of the applications is uniquely determined. That is, at one same instant, only one application is in use, or no application is in use. Therefore, $x_t$ can be expressed in a form of one-hot code. Exemplarily, there are M target applications, and for convenience, M applications are represented by 1, 2,..., M, respectively, and M+1 indicates that no application is in use. If the value of M is 10, and at instant t, the application with the number 7 is in use, then the code vector corresponding to instant t is [0,0,0,0,0,0,1,0,0,0,0], that is, only the position corresponding to the number 7 is 1, and the rest are all 0. It can be understood that, at this time, $x_t$ = [0,0,0,0,0,0,1,0,0,0,0].

Where the candidate status $\tilde{h}_t$ of the current instant (instant t) can be calculated according to formula (3), where when the candidate status $\tilde{h}_t$ is calculated, the tanh activation function is used because its derivative has a relatively large value range, which can effectively alleviate the vanishing gradient of recurrent neural network.

The value of the reset gate $r_t$ is $r_t \in [0,1]$, and the reset gate $r_t$ is used to control how much information in the candidate status $\tilde{h}_t$ is directly obtained from the history information. When $r_t$ = 0, $\tilde{h}_t$ = tanh($Wx_t$). At this time, the candidate status $\tilde{h}_t$ is only relevant to the status information $x_t$ of the application inputted at the current instant (instant t), and is irrelevant to the status information of the application before the instant t (the status information of the historical application), that is, the candidate status $\tilde{h}_t$ is irrelevant to the output status of last instant (instant t-1). When $r_t$ = 1, $\tilde{h}_t$ = tanh($Uh_{t-1} + Wx_t$), at this time, the candidate status $\tilde{h}_t$ is relevant to the status information $x_t$ of the application inputted at the current instant (instant t) and the output status $h_{t-1}$ (history status) at instant t-1.

The value of the update gate $z_t$ is $z_t \in (0,1)$, the update gate $z_t$ is used to control how much information the output status $h_t$ (current status) at instant t needs to retain from the output status (history status) $h_{t-1}$ at instant t-1 (without nonlinear transformation), and how much new information is received from the candidate status $\tilde{h}_t$ at the instant t.

In an embodiment, in the process of training a GRU network according to the plurality of association record groups of usage timing to generate the application prediction model, the number of units on the input layer of the application prediction model is determined according to a vector dimension of each association record group of usage timing, and the number of units on the output layer of the application prediction model is determined according to the number of the at least two target applications. That is, the number of units on the input layer of the application prediction model may be determined according to the vector dimension of each association record group of usage timing, and the number of units on the output layer may be determined according to the number of the at least two target applications.

Exemplarily, the GRU network includes an input layer, a hidden layer (i.e., a GRU unit layer), and an output layer, where the hidden layer may include multiple GRU unit layers, and each GRU unit layer may include multiple GRU unit structures, where the number of GRU unit structures in each GRU unit layer is determined by the number of sampling instants included in each of association record of usage timing groups. In an embodiment, the application prediction model includes two GRU unit layers, and the number of neurons included in the two GRU unit layers respectively is 32 and 50. Exemplarily, each of association record of usage timing groups includes status information of an application at n sampling instants, where n is an integer greater than or equal to 2, and the number of GRU unit structures in each GRU unit layer is n. FIG. 4 is a structure diagram of an application prediction model built based on a GRU network according to an embodiment of the present application. As shown in FIG. 4, two GRU unit layers are included, which are a first GRU unit layer B1 and a second GRU unit layer B2 respectively, where $\hat{y}_{t+1}$ indicates the predicted usage status of application at instant t+1.

The number of units on the input layer (i.e. the number of neurons on the input layer) may be determined according to the vector dimension of each of association record groups of usage timing. For example, each of association record groups of usage timing includes the usage status of the applications corresponding to n+1 sampling instants. Then the usage status of the applications corresponding to the n+1th instant is predicted according to the usage status of the applications corresponding to the first n instants. For example, the applications used at the first n instants in each of association record groups of usage timing is used as the input to predict the applications to be used at the n+1th instant respectively. For a better understanding, the application $x_t$ used at instant t is expressed as $APP_t$, i.e., the status information of the application at instant t, then the data format of the training sample in the process of generating the application prediction model is $[APP_1, APP_2, \cdots; APP_{n-1}, APP_n] \rightarrow APP_{n+1}$. Where, $APP_1$ represents the application used at the first sampling instant, $APP_2$ represents the application used at the second sampling instant, $APP_{n-1}$ represents the application used at the n-l[th] sampling instant, $APP_n$ represents the application used at the nth sampling instant, and $APP_{n+1}$ represents the application used at the n+1th sampling instant.

For example, each of association record groups of usage timing includes the usage status of the applications corresponding to 6 sampling instants. Then the usage status of the applications corresponding to the sixth instant is predicted using the usage status of the applications corresponding to the previous five instants. For example, the applications used at instant T-4, instant T-3, instant T-2, instant T-1 and instant T in each of association record groups of usage timing is used as the input to predict the application to be used at the instant T+1 respectively. That is, the data format of the training sample in the process of generating the application prediction model is $[APP_{T-4}, APP_{T-3},$

$APP_{T-2}$, $APP_{T-1}$, $APP_T$] → $APP_{T+1}$, where, $APP_{T-4}$ represents the application used at sampling instant T-4, $APP_{T-3}$ represents the application used at T-3 sampling instant, $APP_{T-2}$ represents the application used at sampling instant T-2, $APP_{T-1}$ represents the application used at sampling instant T-1, $APP_T$ represents the application used at sampling instant T, and $APP_{T+1}$ represents the application used at sampling instant T+1.

It can be understood that the number of units on the input layer is equal to the number of GRU unit structures in each GRU unit layer.

The number of units on the output layer of the application prediction model may be determined according to the number of the applications. For example, when there are M determined target applications, that is, the application prediction model is established according to the association record of usage timing of the M target applications, and then the number of units on the output layer of the application prediction model is M+1 (including the situation of no application being used).

In an embodiment, in the process of training the GRU network model according to the plurality of association record groups of usage timing to generate the application prediction model, an error function adopted by the application prediction model is a cross entropy loss function: $$J = \sum_{k=1}^{C} y_k \log(\hat{y}_k)$$ ; where, $y_k$ represents a standard value of the usage status of the at least two target applications, $\hat{y}_k$ represents a prediction value of the usage status of the at least two target applications, $C = M+1$, where $M$ represents the number of the at least two target applications, and $J$ represents a cross entropy of the application prediction model. The advantage of this setting is that, it may further optimize a preset neural network parameter, obtain an even better application prediction model, and furthermore, improve the accuracy of the prediction of the application to be started.

In the present embodiment, $APP_{T+1}$ may be in the form of one-hot code. That is, the usage status of the application at instant T+1 is exclusive. For example, there are M target applications. For convenience, the M target applications are represented by 1, 2, ..., M, and M+1 represents that no application is used. If the value of M is 10, at instant T+1, an application of serial number 5 is in the usage status, then a predicted coding vector corresponding to the instant T+1 is [0,0,0,0,1,0,0,0,0,0,0]. That is, only the location corresponding to the serial number 5 is 1, and others are all 0.

In the process of training using a stochastic gradient descent, the training may be accomplished when a loss value equal to or less than a loss threshold, or the training may be accomplished when there is no changed between the or more continuously obtained loss values. After the training is accomplished, respective parameter in the current application prediction model is obtained, and the respective parameter is stored as an optimizing parameter. When it is needed to predict the application through the application prediction model, the optimizing parameter is used for predicting. In an embodiment, the stochastic gradient descent may adopt a way of small batching to train and obtain the optimal parameters, for example, the size of a batch is 128.

The application prediction model establishing method provided by the embodiment of the present application, by diving the association record of usage timing of the applications of the user in the preset time period, inputting to the GRU network for training, and using the plurality of association record groups of usage timing as the training sample to generate the application prediction model, may take full advantage of the association record of usage timing of the applications which may truly reflect the user behavior, optimize the application preloading mechanism, and effectively overcome the problems of the exploding gradient or vanishing gradient generated when the application prediction model is trained based on the simple recurrent neural network, and thus further improve the precision and speed of the training of the application prediction model and the accuracy of the prediction of the application to be started effectively.

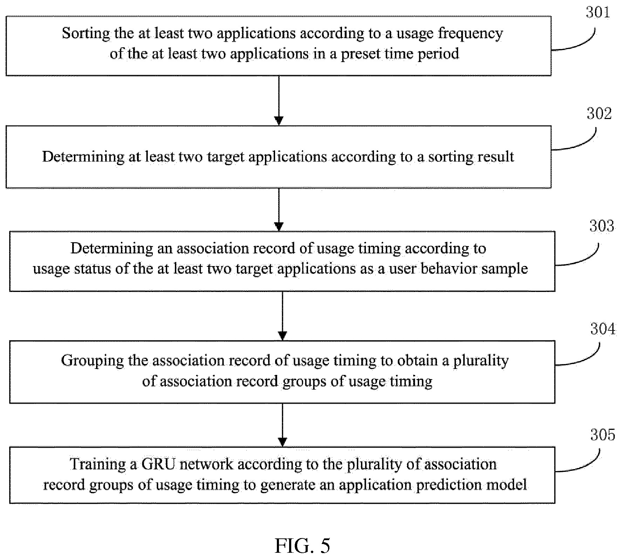

FIG. 5 is a flowchart of another application prediction model establishing method according to an embodiment of the present application, the method includes:

Step 301: sorting the at least two applications according to a usage frequency of the at least two applications in a preset time period.

Step 302: determining at least two target applications according to a sorting result.

Step 303: determining an association record of usage timing according to usage status of the at least two target applications as a user behavior sample.

Step 304: grouping the association record of usage timing to obtain a plurality of association record groups of usage timing.

Step 305: training a GRU network according to the plurality of association record groups of usage timing to generate an application prediction model.

The application prediction model establishing method provided by the embodiment of the present application not only may take full advantage of the association record of usage timing of the applications which may truly reflect the user behavior and optimize the application preloading mechanism, but also may improve the precision of the application prediction model establishment and furthermore, improve the accuracy of the prediction of the application to be started effectively.

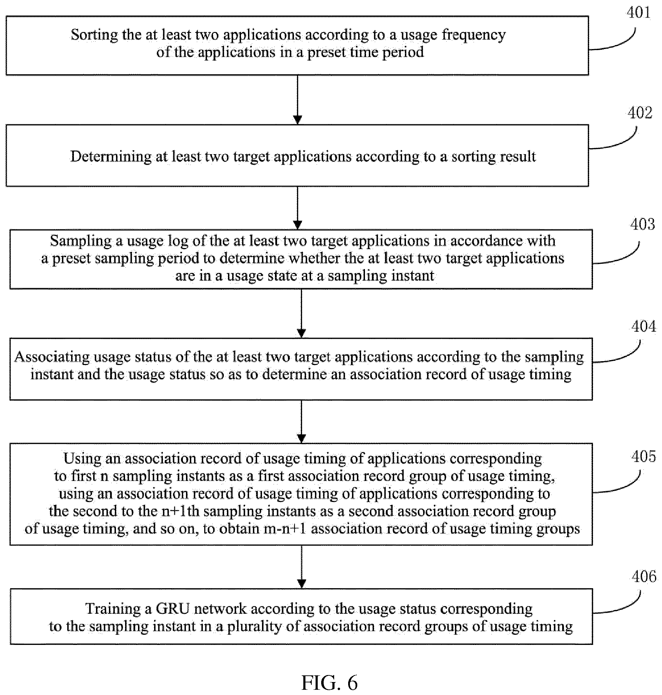

FIG. 6 is a flowchart of still another application prediction model establishing method according to an embodiment of the present application, the method including:

Step 401: sorting the at least two applications according to a usage frequency of the applications in a preset time period.

Step 402: determining at least two target applications according to a sorting result.

Step 403: sampling a usage log of the at least two target applications in accordance with a preset sampling period to determine whether the at least two target applications are in a usage state at a sampling instant.

Step 404: associating usage status of the at least two target applications according to the sampling instant and the usage status so as to determine an association record of usage timing.

Step 405: using an association record of usage timing of applications corresponding to first n sampling instants as a first association record group of usage timing, using an association record of usage timing of applications corresponding to the second to the n+1th sampling instants as a second association record group of usage timing, and so on, to obtain m-n+1 association record of usage timing groups.

Where, n is a natural number greater than or equal to 2, and m is a natural number greater than 3.

Step 406: training a GRU network according to the usage status corresponding to the sampling instant in a plurality of association record groups of usage timing.

The application prediction model establishing method provided by the embodiment of the present application not only may obtain the association record of usage timing of the applications in the preset time period flexibly, but also may improve the precision of the application prediction model establishment, and furthermore, improve the accuracy of the prediction of the application to be started.

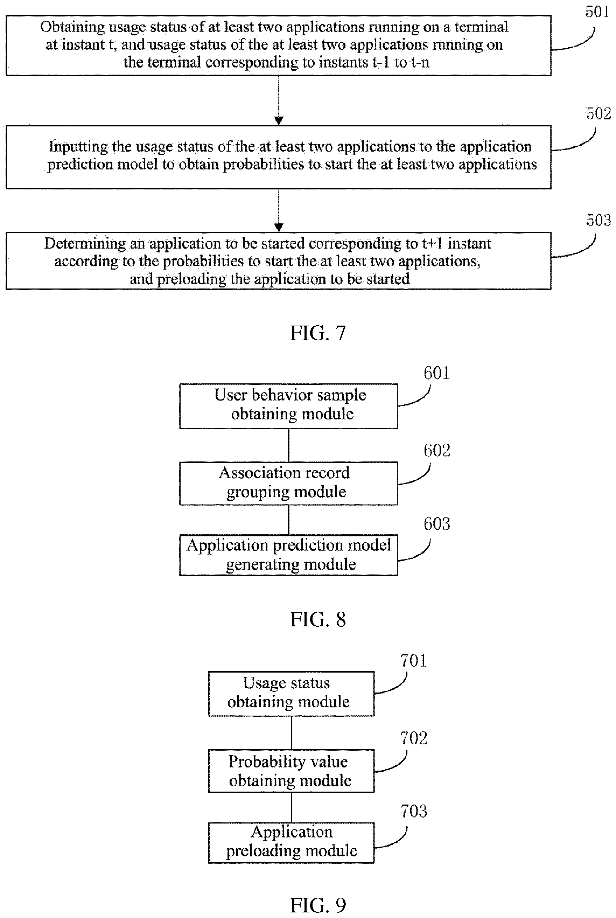

FIG. 7 is a flowchart of an application preloading method according to an embodiment of the present application, and the method may be implemented by an application preloading apparatus, where this apparatus may be achieved by software and/or hardware, which may usually be integrated in a terminal. As shown in FIG. 7, the method includes:

Step 501: obtaining usage status of at least two applications running on a terminal at instant t, and usage status of the at least two applications running on the terminal corresponding to instants t-1 to t-n.

Where, n is a natural number greater than or equal to 2. It should be noted that, this is for example only, and other embodiments are possible.

In the embodiment of the present application, instant t may be understood as the current instant, correspondingly, the obtaining the usage status of the at least two applications running on the terminal at instant t may be understood as obtaining the current usage status of the at least two applications of the terminal. The obtaining the usage status of the at least two applications running on the terminal corresponding to instant t-1 to instant t-n may be understood as obtaining the usage status of the at least two applications running on the terminal corresponding to previous n instants of the current instant respectively. Where, the usage status of the at least two applications includes two situations: an application that is used currently, and no application being used. If there is an application that is used currently, then the usage status is denoted as the identification information or icon information corresponding to the application that is used currently. If no application is used currently, then the usage status is denoted with the identification information representing that no application is used. It should be noted that, the usage status of the at least two applications may also be recorded by adopting other forms.

Step 502: inputting the usage status of the at least two applications to the application prediction model to obtain probabilities to start the at least two applications.

Where, the application prediction model is generated by training the GRU network from a plurality of association record groups of usage timing, and the plurality of association record groups of usage timing are obtained by grouping the association record of usage timing of the applications in a preset time period.

In the embodiment of the present application, the usage status of the applications running on the terminal at instant t and the usage status of the applications running on the terminal corresponding to the instant t-1 to instant t-n are inputted to the pre-trained application prediction model to obtain the probabilities to start the applications outputted by the application prediction model. For example, $[APP_{t-n}, APP_{t-n+1}, \cdots, APP_{t-1}, APP_t]$ used as input vector is inputted to the pre-trained application prediction model. Where, $APP_{t-n}$ represents the application being used at instant t-n, $APP_{t-n+1}$ represents the application being used at instant t-n+1, $APP_{t-1}$ represents the application being used at instant t-1, and $APP_t$ represents the application being used at instant t (the current instant). For example, the application prediction model is generated by training the plurality of association record groups of usage timing of M applications in the preset time period. Then during the application prediction, the application prediction model outputs M+1 possibilities, where, the M+1 possibilities include M possibilities to start the applications and a possibility representing that no application is used.

Step 503: determining an application to be started corresponding to t+1 instant according to the probabilities to start the at least two applications, and preloading the application to be started.

In the embodiment of the present application, the application to be started corresponding to the instant t+1 is determined according to the possibilities obtained at step 502. Where, the application to be started corresponding to the t+1 instant may be understood as the application to be started at a next instant of the current instant. It can be understood that, the usage status of the applications corresponding to instant t (the current instant) and the usage status of the applications corresponding to instant t-1 to instant t-n (n instants before the current instant) are used as an input vector and are inputted to the pre-trained application prediction model to predict the usage status of the applications corresponding to instant t+1 (the next instant of the current instant). That is, a data format for predicting the usage status of the applications corresponding to the next instant through the pre-trained application prediction model is $[APP_{t-n}, APP_{t-n+1}, \cdots, APP_{t-1}, APP_t] \rightarrow APP_{t+1}$, where, $APP_{t+1}$ represents the usage status of the application corresponding to instant t+1 (the next instant of the current instant), that is the application being used at instant t+1.

For example, the application corresponding to a largest possibility in the possibilities obtained at step 502 is used as the application to be started. If the possibility representing that no application is used is the largest, an application corresponding to the second largest possibility is used as the application to be started. The application to be started is preloaded, so that when the user uses the application to be started, the usage efficiency and the fluency during usage are improved.

The application preloading method provided by the embodiment of the present application not only solves the technical problems of too many resources being preloaded by the applications, too many resources being occupied and power consumption becoming larger, and even the fluency of the terminal being affected, but also improves the accuracy of the prediction of the application to be started effectively, and furthermore, reduces power consumption of the terminal system and the memory usage, and optimizes the application preloading mechanism.

FIG. 8 is a structure diagram of an application prediction model establishing apparatus according to an embodiment of the present application. This apparatus may be implemented by software and/or hardware, which may usually be integrated into a terminal, for example, in a serve, and may construct the application prediction model by performing an application prediction model establishing method. As shown in FIG. 8, the apparatus includes:

 a user behavior sample obtaining module 601 configured to obtain a user behavior sample in a preset time period, where the user behavior sample includes association record of usage timing of at least two applications, wherein the association record of usage timing includes a usage record of the at least two applications and a usage timing relationship of the at least two applications;
 an association record grouping module 602 configured to group the association record of usage timing to obtain a plurality of association record groups of usage timing;
 an application prediction model generating module 603 configured to train a preset GRU neural network model according to the plurality of association record groups of usage timing to generate an application prediction model.

The application prediction model establishing apparatus provided by the embodiment of the present application, may take full advantage of the association record of usage timing of the applications which may truly reflect the user behavior, optimize the application preloading mechanism, and effectively overcome the problems of the exploding gradient or vanishing gradient generated when the application prediction model is trained based on the simple recurrent neural network, and thus further improve the precision and speed of the training of the application prediction model and the accuracy of the prediction of the application to be started effectively.

In an embodiment, the user behavior sample obtaining module, includes:

 an application sorting unit configured to sort the at least two applications according to a usage frequency of the at least two applications in the preset time period;
 a target application determining unit configured to determine at least two target applications according to a sorting result;
 an association record of usage timing determining unit configured to determine an association record of usage timing according to usage status of the at least two target applications as the user behavior sample.

In an embodiment, the association record of usage timing determining unit is configured to:

 sample a usage log of the at least two target applications in accordance with a preset sampling period to determine whether the at least two target applications are in usage status at a sampling instant;
 associate the usage status of the at least two target applications according to the sampling instant and the usage status so as to determine the association record of usage timing.

Correspondingly, the application prediction model generating module is configured to:
train the preset GRU neural network model according to the usage status corresponding to the sampling instant in the plurality of association record groups of usage timing.

In an embodiment, the association record grouping module is configured to:
use an association record of usage timing of applications corresponding to first n sampling instants as a first association record group of usage timing, use an association record of usage timing of applications corresponding to the second to the n+1th sampling instants as a second association record group of usage timing, and so on, to obtain m-n+1 association record groups of usage timing, where, n is a natural number greater than or equal to 2, and m is a natural number greater than 3.

In an embodiment, the application prediction model includes a reset gate $r_t$, an update gate $z_t$, a candidate status unit $\tilde{h}_t$, and an output status unit $h_t$, which are respectively calculated by the following formula:

$$z_t = \sigma(W_z x_t + U_z h_{t-1})$$

$$r_t = \sigma(W_r x_t + U_r h_{t-1})$$

$$\tilde{h}_t = \tanh(r_t \odot U h_{t-1} + W x_t)$$

$$h_t = (1 - z_t) \odot \tilde{h}_t + z_t \odot h_{t-1}$$

Where $x_1$ indicates the application used at instant t in the association record of usage timing, each of $W$, $W_*$, $U$ and $U_*$ indicate network parameters for learning, where $* \in \{r, z,\}$, $z_t$ indicates an update gate at instant t, $r_t$ indicates a reset gate at instant t, $\tilde{h}_t$ indicates a candidate status unit at instant t, $h_t$ indicates an output status unit at instant t, $h_{t-1}$ indicates an output status unit at instant t-1, $\sigma$ indicates a Sigmoid Function, $\odot$ indicates vector bitwise multiplying, and a formula of tanh function

$$f(x) = \tanh(x) = \frac{e^x - e^{-x}}{e^x + e^{-x}}$$

is .

In an embodiment, the number of units on the input layer of the application prediction model is determined according to a vector dimension of each association record group of usage timing, and the number of units on the output layer of the application prediction model is determined according to the number of the at least two target applications.

In an embodiment, an error function adopted by the application prediction model is a cross entropy loss

$$J = \sum_{k=1}^{C} y_k \log(\hat{y}_k)$$

function: ;

Where, $y_k$ represents a standard value of the usage status of the at least two target applications, $y_k$ represents a prediction value of the usage status of the at least two target applications, $C = M + 1$, where $M$ represents the number of the at least two target applications, and $J$ represents a cross entropy of the application prediction model.

FIG. 9 is a structure diagram of an application preloading apparatus according to an embodiment of the present application. This apparatus may be implemented by software and/or hardware, which may usually be integrated into a terminal, and may preload the application to be started by performing an application preloading method. As shown in FIG. 9, the apparatus includes:

a usage status obtaining module 701 is configured to obtain usage status of at least two target applications running on a terminal at instant t and usage status of the at least two applications running on the terminal corresponding to t-1 to t-n instants, where, n is a natural number greater than or equal to 2;

a probability value obtaining module 702 configured to input the usage status to a pre-trained application prediction model to obtain probabilities to start the at least two applications, where, the application prediction model is generated by training a preset GRU neural network model from a plurality of association record groups of usage timing, and the plurality of association record groups of usage timing are obtained by grouping association record of usage timing of the at least two applications in a preset time period, where, the association record of usage timing includes a usage record of the at least two applications and a usage timing relationship of the at least two applications;

an application preloading module 703 configured to determine an application to be started corresponding to t+1 instant according to the probabilities to start the at least two applications, and preload the application to be started.

The application preloading apparatus provided by the present application optimizes the applications preloading mechanism by taking full advantage of the association record of usage timing of the applications that truly reflects the user behavior, it not only solves the technical problems of too many resources being preloaded by the applications, too many resources being occupied and power consumption becoming larger, and even the fluency of the terminal being affected, but also effectively overcome the problems of the exploding gradient or vanishing gradient generated when the application prediction model is trained based on the simple recurrent neural network, and further improve the precision and speed of the training of the application prediction model and the accuracy of the prediction of the application to be started.

An embodiment of the present application further provides a storage medium including computer executable instructions. The computer executable instructions are used to execute the application prediction model establishing method when being executed by a computer processor. This method includes:

obtaining a user behavior sample in a preset time period, wherein the user behavior sample includes an association record of usage timing of at least two applications wherein the association record of usage timing includes a usage record of the at least two applications and a usage timing relationship of the at least two applications;

grouping the association record of usage timing to obtain a plurality of association record groups of usage timing; and

training a preset GRU neural network model according to the plurality of association record groups of usage timing to generate the application prediction model.

The storage medium - any kinds of memory device or storage device. The term "storage medium" intent to include: installation medium, for example, CD-ROM, floppy disk or tape device; computer system memory or random access memory, for example, DRAM, DDRRAM, SRAM, EDORAM, Rambus RAM, and the like; non-volatile memory, for example, flash memory, magnetic medium (for example, hard disk or optical storage); register or other similar type of memory component, and on the like. The storage medium may further include other types of memory or a combination thereof. In addition, the storage medium may be located in a first computer system in which the program is executed, or may be located in a different second computer system. The second computer system is coupled to the first computer system through a network, for example, the Internet. The second computer system may provide program instructions to the first computer for execution. The term "storage medium" may include two or more storage media that may reside in different locations (for example, in different computer systems connected through a network). A storage medium may store program instructions (for example, embodied as a computer program) executable by one or more processors.

Of course, in the storage medium including the computer executable instructions provided by the embodiment of the present application, the computer executable instructions thereof are not limited to the application prediction model establishing operation as described above, and may also execute related operations in the application prediction model establishing method provided by any embodiments of the present application.

An embodiment of the present application further provides another storage medium including computer executable instructions. The computer executable instructions are used to execute the application preloading method when being executed by a computer processor. This method includes:

obtaining usage status of at least two applications running on a terminal at instant t, and usage status of the applications running on the terminal corresponding to instants t-1 to t-n, wherein, n is a natural number greater than or equal to 2;

inputting the usage status of the at least two applications to an application prediction model to obtain probabilities to start the applications, where the application prediction model is generated by training a preset GRU neural network model from a plurality of association record groups of usage timing, and the plurality of association record groups of usage timing are obtained by grouping association record of usage timing of the at least two applications in a preset time period;

determining an application to be started corresponding to t+1 instant according to the probabilities to start the at least two applications, and preloading the application to be started.

The specific details of computer storage medium of the embodiment of the present application are similar to the above described computer storage medium, and will be omitted herein.

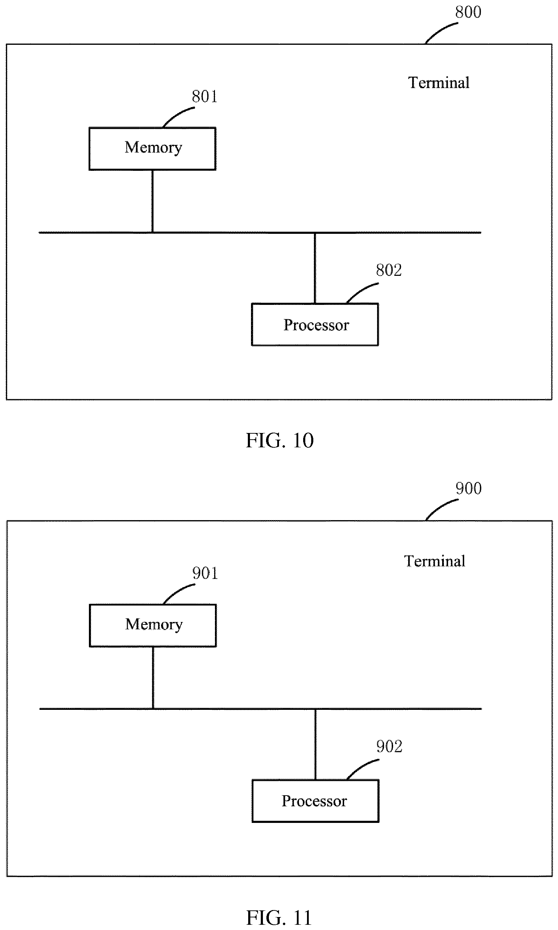

An embodiment of the present application provides a terminal. The application prediction model establishing apparatus provided by the embodiment of the present application may be integrated in the terminal. FIG. 10 is a structure diagram of the terminal according to the embodiment of the present application. As shown in FIG. 10, the terminal 800 may include: a memory 801, a processor 802 and computer programs stored on the memory and may be run in the processor, where the processor 802, when executing the computer programs, implements the application prediction model establishing method described by the embodiments of the present application.

The terminal provided by the present application may take full advantage of the association record of usage timing of the applications which may truly reflect the user behavior, optimize the application preloading mechanism, and improve the accuracy of the prediction of the application to be started effectively.

An embodiment of the present application provides another terminal. The application preloading apparatus provided by the embodiment of the present application may be integrated in the terminal. FIG. 11 is a structure diagram of the terminal according to the embodiment of the present application. As shown in FIG. 11, the terminal 900 may include: a memory 901, a processor 902 and computer programs stored on the memory and may be run in the processor, where the processor 902, when executing the computer programs, implements the application preloading method described by the embodiments of the present application.

The terminal provided by the present application, by obtaining usage status of applications running on a terminal at t instant, and usage status of the at least two applications running on the terminal corresponding to t-1 to t-n instants, where n is a natural number greater than or equal to 2, and inputting the usage status of the at least two applications to a pre-trained application prediction model to obtain probabilities to start the at least two applications to start the at least two applications, where the application prediction model is generated by training a preset GRU neural network model from a plurality of association record groups of usage timing, and the plurality of association record groups of usage timing are obtained by grouping association record of usage timing of the applications in a preset time period, and finally determining an application to be started corresponding to instant t+1 according to the probabilities to start the at least two applications, and preloading the application to be started, not only solves the technical problems of too many resources being preloaded by the applications, too many resources being occupied and power consumption becoming larger, and even the fluency of the terminal being affected, but also improves the accuracy of the prediction of the application to be started effectively, and furthermore, reduces power consumption of the terminal system and the memory usage, and optimizes the application preloading mechanism.

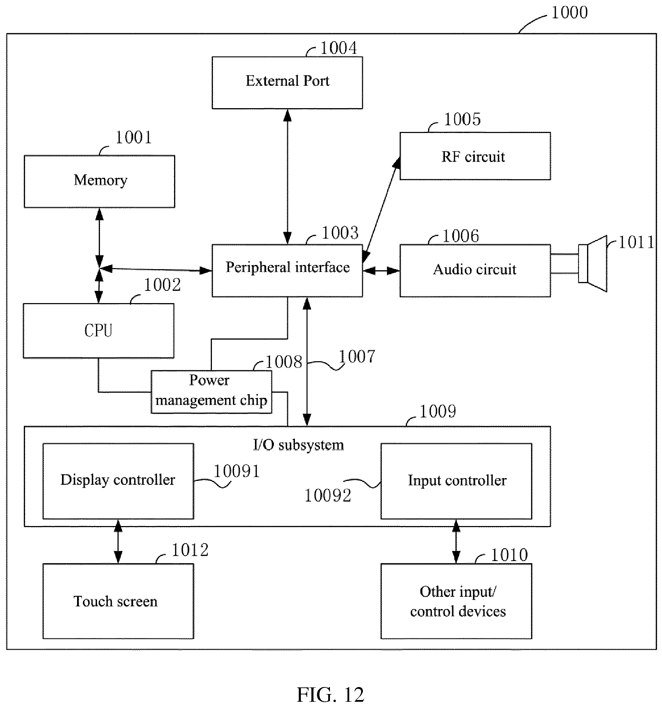

FIG. 12 is a structure diagram of still another terminal according to an embodiment of the present application. As shown in FIG. 12, the terminal may include: a housing (not shown), a memory 1001, a central processing unit (CPU) 1002 (also known as processer, hereinafter as CPU), a circuit board (not shown) and a power circuit (not shown). The circuit board is arranged inside a space encircled by the housing. The CPU 1002 and the memory 1001 are arranged on the circuit board. The power circuit is used to provide power to each circuit or component of the terminal. The memory 1001 is used to store executable program codes. The CPU 1002 runs the computer programs corresponding to the executable program codes by reading the executable program codes stored in the memory 1001, so as to implement the following steps:

obtaining usage status of the at least two applications running on a terminal at instant t, and usage status of the at least two applications running on the terminal corresponding to instants t-1 to t-n, where, n is a natural number greater than or equal to 2; inputting the usage status to a pre-trained application prediction model to obtain probabilities to start the at least two applications, where, the pre-trained application prediction model is generated by training a preset GRU neural network model from a plurality of association record groups of usage timing, and the plurality of association record groups of usage timing are obtained by grouping association record of usage timing of the at least two applications in a preset time period; determining an application to be started corresponding to instant t+1 according to the probabilities to start the at least two applications, and preloading the application to be started.

The terminal further includes: a peripheral interface 1003, an RF (Radio Frequency) circuit 1005, an audio circuit 1006, a speaker 1011, a power management chip 1008, an input/output (I/O) subsystem 1009, other input/control device 1010, touch screen 1012, and external port 1004, which communicates via one or more communication buses or a signal line 1007.

It should be understood that the illustrated terminal 1000 is merely one example of the terminal, and the terminal 1000 may have more or fewer components than those shown in the figure, may combine two or more components, or may have different component configuration. Various components shown in the figure may be implemented in hardware including one or more signal processing and/or application specific integrated circuits, software, or a combination of hardware and software.

The terminal for application preloading provided by the present embodiment is described in detail below, and the terminal takes a mobile phone as an example.

The memory 1001, the memory 1001 may be accessed by the CPU 1002, the peripheral interface 1003, and the like, and the memory 1001 may include a high speed random access memory, and may further include a nonvolatile memory, for example one or more magnetic disk storage device, flash memory device, or other volatile solid-state memory device.

The peripheral interface 1003, the peripheral interface 1003 may connect the input and output peripherals of the device to the CPU 1002 and the memory 1001.

The I/O subsystem 1009, the I/O subsystem 1009 may connect input and output peripherals on the device, for example, the touch screen 1012 and the other input/control device 1010, to the peripheral interface 1003. The I/O subsystem 1009 may include a display controller 10091 and one or more input controller 10092 for controlling the other input/control device 1010. Where, the one or more input controller 10092 receive an electrical signal from the other input/control device 1010 or transmit an electrical signal to the other input/control device 1010, and the other input/control device 1010 may include a physical button (a press button, a rocker button, and the like), a dial plate, a slide switch, a joystick, a click wheel. It is worth to be noted that the input controller 10092 may be connected to any of the following: a keyboard, an infrared port, a USB interface, and a pointing device, for example a mouse.

The touch screen 1012, the touch screen 1012 is an input interface and an output interface between the user terminal and the user, and may display a visual output to the user. The visual output may include a graphic, a text, an icon, a video, and the like.

The display controller 10091 in the I/O subsystem 1009 receives an electrical signal from the touch screen 1012 or transmits an electrical signal to the touch screen 1012. The touch screen 1012 detects the contact on the touch screen, and the display controller 10091 converts the detected contact into an interaction with a user interface object displayed on the touch screen 1012, that is, realizes human-computer interaction, and the user interface object displayed on the touch screen 1012 may be an icon for running a game, an icon for connecting to a corresponding network, and the like. It is worth to be noted that the device may also include a light mouse, which is a touch sensitive surface that does not display a visual output, or an extension of a touch sensitive surface formed by the touch screen.

The RF circuit 1005, is mainly used to establish communication between the mobile phone and the wireless network (i.e., the network side), and implement data reception and transmission between the mobile phone and the wireless network, for example, send and receive a short message, an email, and the like. Specifically, the RF circuit 1005 receives and transmits an RF signal, which is also referred to as an electromagnetic signal. The RF circuit 1005 converts an electrical signal into an electromagnetic signal or converts the electromagnetic signal into the electrical signal, and communicates with a communication network and other device through the electromagnetic signal. The RF circuit 1005 may include a known circuit for performing these functions, including but not limited to an antenna system, an RF transceiver, one or more amplifier, a tuner, one or more oscillator, a digital signal processor, a CODEC (COder-DECoder, codec) chipset, a subscriber identity module (SIM), and the like.

The audio circuit 1006, is mainly used to receive an audio data from the peripheral interface 1003, convert the audio data into an electrical signal, and transmit the electrical signal to the speaker 1011.

The speaker 1011, is configured to restore a voice signal received by the mobile phone from the wireless network through the RF circuit 1005 to a sound and play the sound to the user.

The power management chip 1008, is used to perform power supply and power management for the hardware connected to the CPU 1002, the I/O subsystem, and the peripheral interface.

The application prediction model establishing apparatus, the storage medium, and the terminal provided by the above embodiments may execute the corresponding application prediction model establishing method provided by the embodiment of the present application, and have corresponding functional modules for executing the method and beneficial effects. Regarding technical details that are not described in details in the above embodiments, reference may be made to the application prediction model establishing method provided by any embodiment of the present application.

The application preloading apparatus, the storage medium, and the terminal provided in the above embodiments may execute the corresponding application preloading method provided by the embodiment of the present application, and have corresponding functional modules for executing the method and beneficial effects. Regarding technical details that are not described in details in the above embodiments, reference may be made to the application preloading method provided by any embodiment of the present application.

Note that the above is only the preferred embodiment of the present disclosure and the technical principles applied thereto. Therefore, the present disclosure has been described in detail by the above embodiments, and the scope is determined by the scope of the appended claims.

## Claims

1. An application prediction method, performed by a processor executing instructions stored on a memory, wherein the method comprises:

   obtaining (101) a user behavior sample in a preset time period, wherein the user behavior sample comprises an association record of usage timing of at least two applications, wherein the association record of usage timing comprises a usage record of the at least two applications and a usage timing relationship of the at least two applications;
   grouping (102) the association record of usage timing to obtain a plurality of association record groups of usage timing; and
   training (103) a preset gated recurrent unit (GRU) neural network model according to the plurality of association record groups of usage timing to generate an application prediction model;
   wherein the obtaining (101) the user behavior sample in the preset time period comprises:

      sorting (301) the at least two applications according to a usage frequency of the at least two applications in the preset time period;
      determining (302) at least two target applications according to a sorting result; and
      determining (303) the association record of usage timing according to usage status of the at least two target applications as the user behavior sample;

   wherein the determining (303) the association record of usage timing according to the usage status of the at least two target applications comprises:

      sampling (403) a usage log of the at least two target applications in accordance with a preset sampling period to determine whether the at least two target applications are in a usage state at sampling instants, wherein one and only one target application is in the usage status at the sampling instants, or no target application is in the usage status at the sampling instants; and
      associating (404) the usage status of the at least two target applications according to the sampling instants and the usage status so as to determine the association record of usage timing;

wherein, the training (103) the preset GRU neural network model according to the plurality of association record groups of usage timing comprises:

training (406) the preset GRU neural network model according to the usage status corresponding to the sampling instants in the plurality of association record groups of usage timing;

wherein the application prediction model comprises a reset gate $r_t$, an update gate $z_t$, a candidate status unit $\tilde{h}_t$, and an output status unit $h_t$, which are respectively calculated by the following formula:

$$z_t = \sigma(W_z x_t + U_z h_{t-1})$$

$$r_t = \sigma(W_r x_t + U_r h_{t-1})$$

$$\tilde{h}_t = \tanh(r_t \odot U h_{t-1} + W x_t)$$

$$h_t = (1 - z_t) \odot \tilde{h}_t + z_t \odot h_{t-1}$$

wherein $x_t$ indicates an application used at instant t in the association record of usage timing, each of $W$, $W_*$, $U$ and $U_*$ indicate network parameters for learning, wherein $* \in \{r, z,\}$, $z_t$ indicates an update gate at instant t, $r_t$ indicates a reset gate at instant t, $\tilde{h}_t$ indicates a candidate status unit at instant t, $h_t$ indicates an output status unit at instant t, $h_{t-1}$ indicates an output status unit at instant t-1, $\sigma$ indicates a Sigmoid Function

of $S(x) = \dfrac{1}{1 + e^{-x}}$ , $\odot$ indicates vector bitwise multiplying, and a formula of tanh function is

$$f(x) = \tanh(x) = \frac{e^x - e^{-x}}{e^x + e^{-x}} ;$$

wherein the method further comprises:

obtaining (501) usage status of at least two applications running on a terminal at instant t, and usage status of the at least two applications running on the terminal corresponding to instants t-1 to t-n, wherein, n is a natural number greater than or equal to 2;
inputting (502) the usage status of the at least two applications to the application prediction model to obtain probabilities to start the at least two applications; and
determining (503) an application to be started corresponding to instant t+1 according to the probabilities to start the at least two applications, and preloading the application to be started.

2. The method according to claim 1, wherein the grouping (102) the association record of usage timing to obtain the plurality of association record groups of usage timing comprises:
using (405) an association record of usage timing of applications corresponding to first n sampling instants as a first association record group of usage timing, using an association record of usage timing of applications corresponding to the second to the n+1th sampling instants as a second association record group of usage timing, and so on, to obtain m-n+1 association record groups of usage timing, wherein n is a natural number greater than or equal to 2, and m is a natural number greater than 3.

3. The method according to any of claims 1-2, further comprising:
determining a number of units on an input layer of the application prediction model according to a vector dimension of each of the association record groups of usage timing, and determining a number of units on an output layer of the application prediction model according to a number of the applications.

4. The method according to claim 3, wherein, an error function adopted by the application prediction model is a cross entropy loss function:

$$J = \sum_{k=1}^{C} y_k \log(\hat{y}_k) ;$$

wherein, $y_k$ represents a standard value of usage status of the applications, $\hat{y}_k$ represents a prediction value of the usage status of the applications, $C = M + 1$, wherein, $M$ represents a number of the applications, and $J$ represents a cross entropy of the application prediction model.

5. An application prediction apparatus, comprising a processor and a memory storing instructions thereon, the processor when executing the instructions, being configured to:

obtain a user behavior sample in the preset time period, wherein the user behavior sample comprises the association record of usage timing of the at least two applications;
group the association record of usage timing to obtain the plurality of association record groups of usage timing; and
train the preset GRU neural network model according to the plurality of association record groups of usage timing to generate the application prediction model;

wherein the processor is further configured to:

sort the at least two applications according to a usage frequency of the at least two applications in the preset time period; determine at least two target applications according to a sorting result; and determine the association record of usage timing according to usage status of the at least two target applications as the user behavior sample;

wherein the processor is further configured to:

sample a usage log of the at least two target applications in accordance with a preset sampling period to determine whether the at least two target applications are in a usage state at sampling instants, wherein one and only one target application is in the usage status at the sampling instants, or no target application is in the usage status at the sampling instants; associate the usage status of the at least two target applications according to the sampling instants and the usage status so as to determine the association record of usage timing; and train the preset GRU neural network model according to the usage status corresponding to the sampling instants in the plurality of association record groups of usage timing;

wherein the application prediction model comprises a reset gate $r_t$, an update gate $z_t$, a candidate status unit $\tilde{h}_t$, and an output status unit $h_t$, which are respectively calculated by the following formula:

$$z_t = \sigma(W_z x_t + U_z h_{t-1})$$

$$r_t = \sigma(W_r x_t + U_r h_{t-1})$$

$$\tilde{h}_t = \tanh(r_t \odot U h_{t-1} + W x_t)$$

$$h_t = (1 - z_t) \odot \tilde{h}_t + z_t \odot h_{t-1}$$

wherein $x_t$ indicates an application used at instant t in the association record of usage timing, each of $W$, $W_*$, $U$ and $U_*$ indicate network parameters for learning, wherein $* \in \{r, z,\}$, $z_t$ indicates an update gate at instant t, $r_t$ indicates a

reset gate at instant t, $\tilde{h}_t$ indicates a candidate status unit at instant t, $h_t$ indicates an output status unit at instant t, $h_{t-1}$ indicates an output status unit at instant t-1, $\sigma$ indicates a Sigmoid Function

of $S(x) = \dfrac{1}{1 + e^{-x}}$, $\odot$ indicates vector bitwise multiplying, and a formula of tanh function is

$$f(x) = \tanh(x) = \frac{e^x - e^{-x}}{e^x + e^{-x}};$$

wherein the processor is further configured to:

obtain usage status of at least two applications running on a terminal at instant t, and usage status of the at least two applications running on the terminal corresponding to instants t-1 to t-n, wherein, n is a natural number greater than or equal to 2; input the usage status of the at least two applications to the application prediction model to obtain probabilities to start the at least two applications; and determine an application to be started corresponding to instant t+1 according to the probabilities to start the at least two applications, and preloading the application to be started.

6. The apparatus according to claim 5, wherein the processor is further configured to: use an association record of usage timing of applications corresponding to first n sampling instants as a first association record group of usage timing, use an association record of usage timing of applications corresponding to the second to the n+1th sampling instants as a second association record group of usage timing, and so on, to obtain m-n+1 association record groups of usage timing, wherein n is a natural number greater than or equal to 2, and m is a natural number greater than 3.

**Patentansprüche**

1. Verfahren zur Anwendungsvorhersage, das von einem Prozessor durchgeführt wird, der in einem Speicher gespeicherte Anweisungen ausführt, wobei das Verfahren umfasst:

Erhalten (101) eines Abtastwerts des Benutzerverhaltens in einer voreingestellten Zeitspanne, wobei der Abtastwert des Benutzerverhaltens einen Zuordnungsdatensatz der Benutzungszeit von mindestens zwei Anwendungen umfasst, wobei der Zuordnungsdatensatz der Benutzungszeit einen Benutzungsdatensatz der mindestens zwei Anwendungen und eine Benutzungszeitbeziehung der mindestens zwei Anwendungen umfasst;

Gruppieren (102) des Zuordnungsdatensatzes der Benutzungszeit, um mehrere Zuordnungsdatensatzgruppen der Benutzungszeit zu erhalten; und

Trainieren (103) eines voreingestellten neuronalen Gated-Recurrent-Unit-(GRU)-Netzmodells gemäß den mehreren Zuordnungsdatensatzgruppen der Benutzungszeit, um ein Anwendungsvorhersagemodell zu erzeugen;

wobei das Erhalten (101) des Abtastwerts des Benutzerverhaltens in der voreingestellten Zeitspanne umfasst:

Sortieren (301) der mindestens zwei Anwendungen gemäß einer Benutzungshäufigkeit der mindestens zwei Anwendungen in der voreingestellten Zeitspanne;

Bestimmen (302) von mindestens zwei Zielanwendungen gemäß einem Sortierergebnis; und

Bestimmen (303) des Zuordnungsdatensatzes der Benutzungszeit gemäß dem Benutzungsstatus der mindestens zwei Zielanwendungen als Abtastwert für das Benutzerverhalten;

wobei die Bestimmung (303) des Zuordnungsdatensatzes der Benutzungszeit gemäß dem Benutzungsstatus der mindestens zwei Zielanwendungen umfasst:

Abtasten (403) eines Benutzungsprotokolls der mindestens zwei Zielanwendungen in Übereinstimmung mit einer voreingestellten Abtastperiode, um zu bestimmen, ob die mindestens zwei Zielanwendungen zu Abtastzeitpunkten in einem Benutzungsstatus sind, wobei eine und nur eine Zielanwendung zu den Abtastzeitpunkten in dem Benutzungsstatus ist, oder keine Zielanwendung zu den Abtastzeitpunkten in dem Benutzungsstatus ist; und

Zuordnen (404) des Benutzungsstatus der mindestens zwei Zielanwendungen gemäß den Abtastzeitpunkten und des Benutzungsstatus, um den Zuordnungsdatensatz der Benutzungszeit zu bestimmen;

wobei das Training (103) des voreingestellten neuronalen GRU-Netzmodells gemäß den mehreren Zuordnungsdatensatzgruppen der Benutzungszeit umfasst:

Trainieren (406) des voreingestellten neuronalen GRU-Netzmodells gemäß dem Benutzungsstatus, der den Abtastzeitpunkten in den mehreren Zuordnungsdatensatzgruppen der Benutzungszeit entspricht;

wobei das Anwendungsvorhersagemodell ein Rücksetzgatter $r_t$, ein Aktualisierungsgatter $z_t$, eine Kandidatenstatuseinheit $\tilde{h}_t$ und eine Ausgangsstatuseinheit $h_t$ umfasst, die jeweils durch die folgende Formel berechnet werden:

$$z_t = \sigma(W_z x_t + U_z h_{t-1})$$

$$r_t = \sigma(W_r x_t + U_r h_{t-1})$$

$$\tilde{h}_t = \tanh(r_t \odot U h_{t-1} + W x_t)$$

$$h_t = (1 - z_t) \odot \tilde{h}_t + z_t \odot h_{t-1}$$

wobei $x_t$ eine Anwendung angibt, die zum Zeitpunkt t im Zuordnungsdatensatz der Benutzungszeit verwendet wird, jedes von *W, W\*, U* und *U\** Netzwerkparameter zum Lernen angibt, wobei $* \in \{r,z\}$, $z_t$ ein Aktualisierungsgatter zum Zeitpunkt t angibt, $r_t$ ein Rücksetzgatter zum Zeitpunkt t angibt, $\tilde{h}_t$ eine Kandidatenstatuseinheit zum Zeitpunkt t angibt, $h_t$ eine Ausgangsstatuseinheit zum Zeitpunkt t angibt, $h_{t-1}$ eine Ausgangsstatuseinheit zum Zeitpunkt t-1 angibt, $\sigma$ eine Sigmoidfunktion von $S(x) = \frac{1}{1+e^{-x}}$ angibt, $\odot$ vektor-bitweises Multiplizieren angibt und eine Formel der tanh-Funktion $f(x) = tanh(x) = \frac{e^x - e^{-x}}{e^x + e^{-x}}$ ist;

wobei das Verfahren ferner umfasst:

Erhalten (501) des Benutzungsstatus von mindestens zwei Anwendungen, die auf einem Endgerät zum Zeitpunkt t laufen, und des Benutzungsstatus der mindestens zwei Anwendungen, die auf dem Endgerät entsprechend den Zeitpunkten t-1 bis t-n laufen, wobei n eine natürliche Zahl größer oder gleich 2 ist;

Eingeben (502) des Benutzungsstatus der mindestens zwei Anwendungen in das Anwendungsvorhersagemodell, um Wahrscheinlichkeiten für den Start der mindestens zwei Anwendungen zu erhalten; und

Bestimmen (503) einer zu startenden Anwendung, die dem Zeitpunkt t+1 entspricht, gemäß den Wahrscheinlichkeiten zum Starten der mindestens zwei Anwendungen, und Vorladen der zu startenden Anwendung.

2. Verfahren nach Anspruch 1, wobei das Gruppieren (102) des Zuordnungsdatensatzes der Benutzungszeit, um die mehreren Zuordnungsdatensatzgruppen der Benutzungszeit zu erhalten, umfasst: Verwenden (405) eines Zuordnungsdatensatzes der Benutzungszeit von Anwendungen, die den ersten n Abtastwertzeitpunkten entsprechen, als eine erste Zuordnungsdatensatzgruppe der Benutzungszeit, Verwenden eines Zuordnungsdatensatzes der Benutzungszeit von Anwendungen, die den zweiten bis zu den n+1ten Abtastwertzeitpunkten entsprechen, als eine zweite Zuordnungsdatensatzgruppe der Benutzungszeit, und so weiter, um m-n+1 Zuordnungsdatensatzgruppen der Benutzungszeit zu erhalten, wobei n eine natürliche Zahl größer oder gleich 2 ist und m eine natürliche Zahl größer als 3 ist.

3. Verfahren nach einem der Ansprüche 1-2, ferner umfassend:

   Bestimmen einer Anzahl von Einheiten auf einer Eingabeschicht des Anwendungsvorhersagemodells gemäß einer Vektordimension jeder der Zuordnungsdatensatzgruppen der Benutzungszeit, und
   Bestimmen einer Anzahl von Einheiten auf einer Ausgabeschicht des Anwendungsvorhersagemodells gemäß einer Anzahl der Anwendungen.

4. Verfahren nach Anspruch 3, wobei eine von dem Anwendungsvorhersagemodell angenommene Fehlerfunktion eine Kreuzentropieverlustfunktion ist: $J = \sum_{k-1}^{C} y_k \, log(\hat{y}_k)$; Wobei $y_k$ einen Standardwert des Verwendungsstatus der Anwendungen repräsentiert, $\hat{y}_k$ einen Vorhersagewert des Verwendungsstatus der Anwendungen repräsentiert, $C = M + 1$, wobei, $M$ eine Anzahl der Anwendungen repräsentiert, und $J$ eine Kreuzentropie des Anwendungsvorhersagemodells repräsentiert.

5. Vorrichtung zur Anwendungsvorhersage, umfassend einen Prozessor und einen Speicher, der Anweisungen darauf speichert, wobei der Prozessor bei der Ausführung der Anweisungen dazu ausgelegt ist:

   einen Abtastwert des Benutzerverhaltens in der voreingestellten Zeitspanne zu erhalten, wobei der Abtastwert des Benutzerverhaltens den Zuordnungsdatensatz der Benutzungszeit der mindestens zwei Anwendungen umfasst;
   den Zuordnungsdatensatz der Benutzungszeit zu gruppieren, um die mehreren Zuordnungsdatensatzgruppen der Benutzungszeit zu erhalten; und
das voreingestellte neuronale GRU-Netzmodell gemäß den mehreren Zuordnungsdatensatzgruppen der Benutzungszeit zu trainieren, um das Anwendungsvorhersagemodell zu erzeugen;
wobei der Prozessor ferner dazu ausgelegt ist:

   die mindestens zwei Anwendungen gemäß einer Benutzungshäufigkeit der mindestens zwei Anwendungen in der voreingestellten Zeitspanne zu sortieren;
   mindestens zwei Zielanwendungen gemäß einem Sortierergebnis zu bestimmen; und
   den Zuordnungsdatensatz der Benutzungszeit gemäß dem Benutzungsstatus der mindestens zwei Zielanwendungen als Abtastwert für das Benutzerverhalten zu bestimmen;

wobei der Prozessor ferner dazu ausgelegt ist:

   ein Benutzungsprotokoll der mindestens zwei Zielanwendungen in Übereinstimmung mit einer voreingestellten Abtastperiode abzutasten, um zu bestimmen, ob die mindestens zwei Zielanwendungen zu Abtastzeitpunkten in einem Benutzungsstatus sind, wobei eine und nur eine Zielanwendung zu den Abtastzeitpunkten in dem Benutzungsstatus ist, oder keine Zielanwendung zu den Abtastzeitpunkten in dem Benutzungsstatus ist;
   den Benutzungsstatus der mindestens zwei Zielanwendungen gemäß den Abtastzeitpunkten und dem Benutzungsstatus zuzuordnen, um den Zuordnungsdatensatz der Benutzungszeit zu bestimmen; und
   das voreingestellte neuronale GRU-Netzmodell gemäß dem Benutzungsstatus zu trainieren, der den Abtastzeitpunkten in den mehreren Zuordnungsdatensatzgruppen der Benutzungszeit entspricht;

wobei das Anwendungsvorhersagemodell ein Rücksetzgatter $r_t$, ein Aktualisierungsgatter $z_t$, eine Kandidatenstatuseinheit $\tilde{h}_t$ und eine Ausgangsstatuseinheit $h_t$ umfasst, die jeweils durch die folgende Formel berechnet werden:

$$z_t = \sigma(W_z x_t + U_z h_{t-1})$$

$$r_t = \sigma(W_r x_t + U_r h_{t-1})$$

$$\tilde{h}_t = \tanh(r_t \odot U h_{t-1} + W x_t)$$

$$h_t = (1 - z_t) \odot \tilde{h}_t + z_t \odot h_{t-1}$$

wobei $x_t$ eine Anwendung angibt, die zum Zeitpunkt t im Zuordnungsdatensatz der Benutzungszeit verwendet wird, jedes von $W$, $W_*$, $U$ und $U_*$ Netzwerkparameter zum Lernen angibt, wobei $* \in \{r,z\}$, $z_t$ ein Aktualisierungsgatter zum Zeitpunkt t angibt, $r_t$ ein Rücksetzgatter zum Zeitpunkt t angibt, $\tilde{h}_t$ eine Kandidatenstatuseinheit zum Zeitpunkt t angibt, $h_t$ eine Ausgangsstatuseinheit zum Zeitpunkt t angibt, $h_{t-1}$ eine Ausgangsstatuseinheit zum Zeitpunkt t-1 angibt, $\sigma$ eine Sigmoidfunktion von

$$S(x) = \frac{1}{1+e^{-x}}$$ angibt, $\odot$ vektor-bitweises Multiplizieren angibt und eine Formel der tanh-

Funktion $f(x) = tanh(x) = \frac{e^x - e^{-x}}{e^x + e^{-x}}$ ist;

wobei der Prozessor ferner dazu ausgelegt ist:

den Benutzungsstatus von mindestens zwei Anwendungen, die auf einem Endgerät zum Zeitpunkt t laufen, und den Benutzungsstatus der mindestens zwei Anwendungen, die auf dem Endgerät entsprechend den Zeitpunkten t-1 bis t-n laufen, zu erhalten, wobei n eine natürliche Zahl größer oder gleich 2 ist;

den Benutzungsstatus der mindestens zwei Anwendungen in das Anwendungsvorhersagemodell einzugeben, um Wahrscheinlichkeiten für den Start der mindestens zwei Anwendungen zu erhalten; und

eine zu startende Anwendung, die dem Zeitpunkt t+1 entspricht, gemäß den Wahrscheinlichkeiten zum Starten der mindestens zwei Anwendungen zu bestimmen, und Vorladen der zu startenden Anwendung.

6. Vorrichtung nach Anspruch 5, wobei der Prozessor ferner dazu ausgelegt ist:
einen Zuordnungsdatensatz der Benutzungszeit von Anwendungen, die den ersten n Abtastwerten entsprechen,
als eine erste Zuordnungsdatensatzgruppe der Benutzungszeit zu verwenden, einen Zuordnungsdatensatz der Benutzungszeit von Anwendungen, die den zweiten bis zu den n+1ten Abtastwerten entsprechen, als eine zweite Zuordnungsdatensatzgruppe der Benutzungszeit, und so weiter zu verwenden, um m-n+1 Zuordnungsdatensatzgruppen der Benutzungszeit zu erhalten, wobei n eine natürliche Zahl größer oder gleich 2 ist und m eine natürliche Zahl größer als 3 ist.

## Revendications

1. Procédé de prédiction d'application, réalisé par un ordinateur exécutant des instructions stockées dans une mémoire,
dans lequel le procédé comprend :

l'obtention (101) d'un échantillon de comportement d'utilisateur au cours d'une période de temps prédéfinie, dans lequel l'échantillon de comportement d'utilisateur comprend un enregistrement d'association de chronologie d'utilisation d'au moins deux applications, dans lequel l'enregistrement d'association de chronologie d'utilisation comprend un enregistrement d'utilisation desdites au moins deux applications et une relation de chronologie d'utilisation desdites au moins deux applications ;
le regroupement (102) de l'enregistrement d'association de chronologie d'utilisation pour obtenir une pluralité de groupes d'enregistrements d'association de chronologie d'utilisation ; et
l'apprentissage (103) d'un modèle de réseau neuronal d'unité récurrente à déclenchement (GRU) prédéfini selon la pluralité de groupes d'enregistrements d'association de chronologie d'utilisation pour générer un modèle de prédiction d'application ;
dans lequel l'obtention (101) de l'échantillon de comportement d'utilisateur au cours de la période de temps prédéfinie comprend :

le tri (301) desdites au moins deux applications selon une fréquence d'utilisation desdites au moins deux applications au cours de la période de temps prédéfinie ; la détermination (302) d'au moins deux applications cibles selon un résultat de tri ; et
la détermination (303) de l'enregistrement d'association de chronologie d'utilisation selon l'état d'utilisation desdites au moins deux applications cibles en tant qu'échantillon de comportement d'utilisateur ;

dans lequel la détermination (303) de l'enregistrement d'association de chronologie d'utilisation selon l'état d'utilisation desdites au moins deux applications cibles comprend :

l'échantillonnage (403) d'un journal d'utilisation desdites au moins deux applications cibles selon une période d'échantillonnage prédéfinie pour déterminer si lesdites au moins deux applications cibles sont dans un état d'utilisation à des instants d'échantillonnage, dans lequel une et une seule application cible est dans l'état d'utilisation aux instants d'échantillonnage, ou aucune application cible n'est dans l'état d'utilisation aux instants d'échantillonnage ; et

l'association (404) de l'état d'utilisation desdites au moins deux applications cibles selon les instants d'échantillonnage et l'état d'utilisation de manière à déterminer l'enregistrement d'association de chronologie d'utilisation ;

dans lequel l'apprentissage (103) du modèle de réseau neuronal GRU prédéfini selon la pluralité de groupes d'enregistrements d'association de chronologie d'utilisation comprend :
l'apprentissage (406) du modèle de réseau neuronal GRU prédéfini selon l'état d'utilisation correspondant aux instants d'échantillonnage dans la pluralité de groupes d'enregistrements d'association de chronologie d'utilisation ;
dans lequel le modèle de prédiction d'application comprend une porte de réinitialisation $r_t$, une porte de mise à jour $z_t$, une unité d'état candidat $h_t$, et une unité d'état de sortie $h_t$ qui sont respectivement calculées par la formule suivante :

$$z_t = \sigma(W_z x_t + U_z h_{t-1})$$

$$r_t = \sigma(W_r x_t + U_r h_{t-1})$$

$$\tilde{h}_t = tanh(r_t \odot U h_{t-1} + W x_t)$$

$$h_t = (1 - z_t) \odot \tilde{h}_t + z_t \odot h_{t-1}$$

où $x_t$ indique une application utilisée à l'instant t dans l'enregistrement d'association de chronologie d'utilisation, chacun de $W$, $W_*$, $U$ et $U_*$ indique des paramètres de réseau pour l'apprentissage, où $* \in \{r,z\}$, $z_t$ indique une porte de mise à jour à l'instant t, $r_t$ indique une porte de réinitialisation à l'instant t, $\tilde{h}_t$ indique une unité d'état candidat à l'instant t, $h_t$ indique une unité d'état de sortie à l'instant t, $h_{t-1}$ indique une unité d'état de sortie à l'instant t-1, $\sigma$ indique une fonction sigmoïde donnée par $S(x) = \frac{1}{1+e^{-x}}$, $\odot$ indique une multiplication bit à bit vectorielle, et une formule de la fonction tanh est donnée par

$$f(x) = tanh(x) = \frac{e^x - e^{-x}}{e^x + e^{-x}} \; ;$$

dans lequel le procédé comprend en outre :

l'obtention (501) de l'état d'utilisation d'au moins deux applications s'exécutant sur un terminal à l'instant t,
et l'état d'utilisation desdites au moins deux applications s'exécutant sur le terminal correspondant aux instants t-1 à t-n, où n est un nombre naturel supérieur ou égal à 2 ;
l'introduction (502) de l'état d'utilisation desdites au moins deux applications dans le modèle de prédiction d'application pour obtenir des probabilités de lancement desdites au moins deux applications ; et
la détermination (503) d'une application à lancer correspondant à l'instant t+1 selon les probabilités de lancement desdites au moins deux applications, et le préchargement de l'application à lancer.

2. Procédé selon la revendication 1, dans lequel le regroupement (102) de l'enregistrement d'association de chronologie d'utilisation pour obtenir la pluralité de groupes d'enregistrements d'association de chronologie d'utilisation comprend :
l'utilisation (405) d'un enregistrement d'association de chronologie d'utilisation d'applications correspondant à n premiers instants d'échantillonnage en tant que premier groupe d'enregistrements d'association de chronologie d'utilisation, l'utilisation d'un enregistrement d'association de chronologie d'utilisation d'applications correspondant aux deuxième à n+1$^{ème}$ instants d'échantillonnage en tant que deuxième groupe d'enregistrement d'association de chronologie d'utilisation, et ainsi de suite, pour obtenir m-n+1 groupes d'enregistrements d'association de chronologie d'utilisation, où n est un nombre naturel supérieur ou égal à 2, et m est un nombre naturel supérieur à 3.

3. Procédé selon l'une quelconque des revendications 1-2, comprenant en outre :
la détermination d'un nombre d'unités sur une couche d'entrée du modèle de prédiction d'application selon une dimension vectorielle de chacun des groupes d'enregistrements d'association de chronologie d'utilisation, et la détermination d'un nombre d'unités sur une couche de sortie du modèle de prédiction d'application selon un nombre des applications.

4. Procédé selon la revendication 3, dans lequel une fonction d'erreur adoptée par le modèle de prédiction d'application est une fonction de perte d'entropie croisée :

$$J = \sum_{k=1}^{C} y_k \, log(\hat{y}_k) \, ;$$

où $y_k$ représente une valeur type de l'état d'utilisation des applications, $\hat{y}_k$ représente une valeur de prédiction de l'état d'utilisation des applications, $C = M+1$, où $M$ représente un nombre d'applications, et $J$ représente une entropie croisée du modèle de prédiction d'application.

5. Appareil de prédiction d'application, comprenant un processeur et une mémoire stockant des instructions, le processeur, lorsqu'il exécute les instructions, étant configuré pour :

obtenir un échantillon de comportement d'utilisateur au cours de la période de temps prédéfinie, dans lequel l'échantillon de comportement d'utilisateur comprend l'enregistrement d'association de chronologie d'utilisation desdites au moins deux applications ;
regrouper l'enregistrement d'association de chronologie d'utilisation pour obtenir la pluralité de groupes d'enregistrements d'association de chronologie d'utilisation ; et
effectuer l'apprentissage du modèle de réseau neuronal GRU prédéfini selon la pluralité de groupes d'enregistrements d'association de chronologie d'utilisation pour générer le modèle de prédiction d'application ;
dans lequel le processeur est en outre configuré pour :

trier lesdites au moins deux applications selon une fréquence d'utilisation desdites au moins deux applications au cours de la période de temps prédéfinie ; déterminer au moins deux applications cibles selon un résultat de tri ; et
déterminer l'enregistrement d'association de chronologie d'utilisation selon l'état d'utilisation desdites au moins deux applications cibles en tant qu'échantillon de comportement d'utilisateur ;

dans lequel le processeur est en outre configuré pour :

échantillonner un journal d'utilisation desdites au moins deux applications cibles selon une période d'échantillonnage prédéfinie pour déterminer si lesdites au moins deux applications cibles sont dans un état d'utilisation à des instants d'échantillonnage, dans lequel une et une seule application cible est dans l'état d'utilisation aux instants d'échantillonnage, ou aucune application cible n'est dans l'état d'utilisation aux instants d'échantillonnage ;
associer l'état d'utilisation desdites au moins deux applications cibles selon les instants d'échantillonnage et l'état d'utilisation de manière à déterminer l'enregistrement d'association de chronologie d'utilisation ; et
effectuer l'apprentissage du modèle de réseau neuronal GRU prédéfini selon l'état d'utilisation correspondant aux instants d'échantillonnage dans la pluralité de groupes d'enregistrements d'association de chronologie d'utilisation ;

dans lequel le modèle de prédiction d'application comprend une porte de réinitialisation $r_t$, une porte de mise à jour $z_t$, une unité d'état candidat $\tilde{h}_t$, et une unité d'état de sortie $h_t$ qui sont respectivement calculées par la formule suivante :

$$z_t = \sigma(W_z x_t + U_z h_{t-1})$$

$$r_t = \sigma(W_r x_t + U_r h_{t-1})$$

$$\tilde{h}_t = tanh(r_t \odot U h_{t-1} + W x_t)$$

$$h_t = (1 - z_t) \odot \tilde{h}_t + z_t \odot h_{t-1}$$

où $x_t$ indique une application utilisée à l'instant t dans l'enregistrement d'association de chronologie d'utilisation, chacun de W, $W*$, $U$ et $U*$ indique des paramètres de réseau pour l'apprentissage, où $* \in \{r,z\}$, $z_t$ indique une porte de mise à jour à l'instant t, $r_t$ indique une unité d'état candidat à l'instant t, $\tilde{h}_t$ indique une unité d'état candidat à l'instant t, $h_t$ indique une unité d'état de sortie à l'instant t, $h_{t-1}$ indique une unité d'état de sortie à l'instant t-1, $\sigma$ indique une fonction sigmoïde donnée par $S(x) = \frac{1}{1+e^{-x}}$, $\Theta$ indique une multiplication bit à bit vectorielle, et une formule de la fonction tanh est donnée par

$$f(x) = tanh(x) = \frac{e^x - e^{-x}}{e^x + e^{-x}} \, ;$$

dans lequel le processeur est en outre configuré pour :

obtenir l'état d'utilisation d'au moins deux applications s'exécutant sur un terminal à l'instant t, et l'état d'utilisation desdites au moins deux applications s'exécutant sur le terminal correspondant aux instants t-1 à t-n, où n est un nombre naturel supérieur ou égal à 2 ;

introduire l'état d'utilisation desdites au moins deux applications dans le modèle de prédiction d'application pour obtenir des probabilités de lancement desdites au moins deux applications ; et

déterminer une application à lancer correspondant à l'instant t+1 selon les probabilités de lancement desdites au moins deux applications, et précharger l'application à lancer.

6. Appareil selon la revendication 5, dans lequel le processeur est en outre configuré pour :

utiliser un enregistrement d'association de chronologie d'utilisation d'applications correspondant à n premiers instants d'échantillonnage en tant que premier groupe d'enregistrements d'association de chronologie d'utilisation, utiliser un enregistrement d'association de chronologie d'utilisation d'applications correspondant aux deuxième à n+1$^{ème}$ instants d'échantillonnage en tant que deuxième groupe d'enregistrements d'association de chronologie d'utilisation, et ainsi de suite, pour obtenir m-n+1 groupes d'enregistrements d'association de chronologie d'utilisation, où n est un nombre naturel supérieur ou égal à 2, et m est un nombre naturel supérieur à 3.

Obtaining a user behavior sample in a preset time period

101

Grouping the association record of usage timing to
obtain a plurality of association record groups of usage timing

102

Training a preset GRU neural network model according
to the plurality of association record groups of usage
timing to generate the application prediction model.

103

FIG. 1

A

Sliding window ➡

Sliding
window ➡

A

T−n+1    T−n+2    T−1    T    T+1    T+2

T−n    T−n+1    T−2    T−1    T    T+1

FIG. 2

○×○ Vector Bitwise Multiplying  ○+○ Vector Sum  ⊕ Vector Stitching

FIG. 3

FIG. 4

Sorting the at least two applications according to a usage frequency
of the at least two applications in a preset time period
301

Determining at least two target applications according to a sorting result
302

Determining an association record of usage timing according to
usage status of the at least two target applications as a user behavior sample
303

Grouping the association record of usage timing to obtain a plurality
of association record groups of usage timing
304

Training a GRU network according to the plurality of association
record groups of usage timing to generate an application prediction model
305

FIG. 5

FIG. 6

Obtaining usage status of at least two applications running on a terminal at instant t, and usage status of the at least two applications running on the terminal corresponding to instants t-1 to t-n — 501

Inputting the usage status of the at least two applications to the application prediction model to obtain probabilities to start the at least two applications — 502

Determining an application to be started corresponding to t+1 instant according to the probabilities to start the at least two applications, and preloading the application to be started — 503

FIG. 7

User behavior sample obtaining module — 601

Association record grouping module — 602

Application prediction model generating module — 603

FIG. 8

Usage status obtaining module — 701

Probability value obtaining module — 702

Application preloading module — 703

FIG. 9

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201711157308
- US 2014373032 A1
- US 2008005736 A1
- US 2014189538 A1